# EUROPEAN PATENT APPLICATION

(11) **EP 2 544 459 A1**
(43) Date of publication of application: **09.01.2013**
(21) Application number: 11750811.9
(22) Date of filing: 04.03.2011
(51) Int. Cl.: H04N 13/04, G02B 27/22

(54) **STEREOSCOPIC VIDEO DISPLAY DEVICE AND OPERATION METHOD OF STEREOSCOPIC VIDEO DISPLAY DEVICE**

(30) Priority: 03.03.2011 JP 2011046847; 24.05.2010 JP 2010118774; 05.03.2010 JP 2010049844
(71) Applicant: Sharp Kabushiki Kaisha, Osaka-shi, Osaka 545-8522 (JP)
(72) Inventor: CHIKAZAWA, Takahiro, Osaka-shi (JP)
(74) Representative: Müller - Hoffmann & Partner
(86) International application number: PCT/JP2011/055065
(87) International publication number: WO 2011/108702

(57) **Abstract**

Because a human being has independent visual capabilities in right and left eyes, a right-eye image and a left-eye image constituting a stereoscopic content video are visually recognized as different images (apart from the difference due to disparity), and as a result, stereoscopic viewing may not be performed successfully. Disclosed is a stereoscopic video display device wherein before an actual stereoscopic video is displayed, left-eye and right-eye test images both of which include an identical object, are alternately displayed at a comparatively low speed, and each of the images are respectively visually recognized by the left eye and the right eye of the viewer as different images, and input for image quality adjustment can be received independently for the right and the left so that the identical objects in both of the images can be viewed to be identical by the viewer. Then, using the image quality adjustment value, image adjustment of the image for the actual stereoscopic content video display is performed.

## Description

### Field of the Invention

The present invention relates to a technology to appropriately adjust image qualities of left-eye and right-eye images in order to solve visual non-uniformity due to differences between right and left eyesights of a viewer or optical property of 3D glasses when displaying a stereoscopic content image configured by the left-eye and right-eye images.

### Background Art

A human being can stereoscopically recognize an object in his sight by a subtle difference of the sight between positions of right and left eyes (difference in viewpoint), i.e., parallax. Conventionally, as a method for stereoscopic viewing of a 2D image including a video, 'parallax barrier system' where 2D images for left-eye and right-eye, where the parallax is caused by subtle difference of viewpoints, is alternatively displayed at a high speed, and projected to the respective eyes utilizing a liquid-crystal shutter or a lenticuler lens etc, thereby making the viewer recognize the object as one stereoscopic image. For example, in Japanese Unexamined Utility Model Application Publication No. H06-289320, a technology for displaying stereoscopic image utilizing the 'lenticular system' as one of the 'parallax barrier systems' is disclosed.

Patent Reference 1: Japanese Unexamined Utility Model Application Publication No. H06-289320

### Disclosure of the Invention

### Problems that the Invention Tries to Solve

Since a human being has independent visual capabilities in right and left eyes, when visulal perception is non-uniform between the left-eye and right-eye such as exteremely-low vision of the left eye in comparison with that of the right eye or color blindness in one eye, a right-eye image is clearly recognized while a left-eye image is not clearly recognized. Therefore, the right-eye image and the left-eye image constituting a stereoscopic content image are visually recognized as different images (apart from the difference due to disparity), and as a result, stereoscopic viewing may not be performed successfully.

Moreover, even when the visulal perception is almost uniform between the left-eye and right-eye, when wearing 3D glasses having difference in refractive index or color between left-eye and right-eye, the both images are visually recognized as different images, thereby causing the same problem. Moreover, when there are difference in both human visual perception and 3D glassses, the above problem is similarly caused.

### Means for Solving the Problems

In order to solve the above deficiencies, we provide a stereoscopic image display apparatus wherein before an actual stereoscopic image is displayed, left-eye and right-eye test images, both of which include an identical object, are alternately displayed at a comparatively low speed, and utilizing a liquid-crystal shutter etc. similar to displaying a stereoscopic image, each of the images are respectively visually recognized by the left eye and the right eye of the viewer as different images, and input for image quality adjustment can be received independently for the right and the left eye so that the identical objects in both of the images are seen to be identical by the viewer. Then, using the received image quality adjustment parameter value, image quality adjustment of the image for the actual stereoscopic content image display is independently performed for each of the right and left images.

Specifically, an aspect of the invention provides a stereoscopic image display apparatus, comprising a first test image acquisition unit, acquiring left-eye and right-eye test images, both of which at least partially include an identical object for adjusting right and left image ouputs to solve visual non-uniformity due to differences between right and left eyesights of a viewer of a stereoscopic content image; a first image alternative display unit, alternately displaying the acquired left-eye and right-eye test images at a low speed without persistence of vision; a first reception unit for image quality adjustment of left-eye test image, receiving an image quality adjustment from the viewer, such that the identical objects in the left-eye test image can be viewed to be identical with the object in the right-eye test image; and/or a first reception unit for image quality adjustment of right-eye test image, receiving an image quality adjustment from the viewer, such that the identical objects in the left-eye test image can be viewed to be identical with the object in the left-eye test image; and a first image quality adjustment unit, adjusting the left-eye and/or right-eye test images according to the image quality adjustment from the viewer received by the first reception unit for image quality adjustment of left-eye test image and/or the first reception unit for image quality adjustment of right-eye test image; and a first correction unit for right and left ouputs, correcting the right and left ouputs of the stereoscopic content image according to the image quality adjustment, received from the viewer and used by the first image quality adjustment unit.

More specifically, in the above configuraiton, the first test image acquisition unit may further comprise a first acquisition section for test image for naked eyes, acquiring left and right test images for naked eyes to solve visual non-uniformity due to differences between right and left eyesights with the naked eyes of the viewer. Moreover, the first test image acquisition unit further comprises a first acquisition section for test image for glasses, acquiring left and right test images for glasses to solve visual non-uniformity due to differences between right and left eyesights with 3D glasses of the viewer. An example of the 3D glasses include 3D glasses having a liquid-crystal shutter. In the liquid-crystal shutter system, liquid-crystal shutters for right eye and left eye alternatively repeat light transmission and light interception with respect to each image. As to the cycle of this repetition, in the case of image of 60Hz, the repetition is performed at 120 Hz or 240 Hz.

Moreover, in an aspect of the invention, a right-eye test image and a left-eye test image (e.g., Sweep image), where the images are separately inputted into the right eye and left eye, and are superimposed on each other, thereby emphasizing visual non-uniformity upon recognition by the viewer, are provided. Subsequently, for example, utilizing a liquid-crystal shutter etc. similar to displaying a stereoscopic image, both images are superimposingly recognized thorugh the left eye and the right eye of the viewer as one image, and input for image quality adjustment can be received independently for the right and the left so that the visual non-uniformity emphasized by the superimposingly recognized image is solved. Then, using the received image quality adjustment parameter value, image quality adjustment of the image for the actual stereoscopic content image display is independently performed for each of the right and left image.

Specifically, an aspect of the invention provides a stereoscopic image display apparatus, comprising a second test image acquisition unit, acquiring a left-eye test image, at least partially including a left object to emphasize visual non-uniformity by being superimposed on a right-eye test image, and the right-eye test image, at least partially including a right object to emphasize visual non-uniformity by being synchronized and recognized with the left-eye test image, for adjusting right and left image ouputs to solve visual non-uniformity due to differences between right and left eyesights of a viewer of stereoscopic content image; a second image display unit, displaying the acquired left-eye and right-eye test images, such that the viewer can recognize both images viewed from the viewer's right and left eyes as an superimposing test image; a second reception unit for image quality adjustment of left-eye test image, receiving an image quality adjustment for the left-eye test image from the viewer, such that the visual non-uniformity of the object emphasized by the superimposing test image is solved; and/or a second reception unit for image quality adjustment of right-eye test image, receiving an image quality adjustment for the right-eye test image from the viewer, such that the visual non-uniformity of the object emphasized by the superimposing test image is solved; and a second image quality adjustment unit, adjusting the left-eye and/or right-eye test images according to the image quality adjustment from the viewer received by the second reception unit for image quality adjustment of left-eye test image and/or the second reception unit for image quality adjustment of right-eye test image; and a second correction unit for right and left ouputs, correcting the right and left ouputs of the stereoscopic content image according to the image quality adjustment, received from the viewer and used by the second image quality adjustment unit.

More specifically, in the above configuraiton, the second test image acquisition unit further comprises a second acquisition section for test image for naked eyes, acquiring left-eye and right-eye test images for naked eyes to solve visual non-uniformity due to differences between right and left eyesights with naked eyes of the viewer. Moreover, the second test image acquisition unit may further comprise a second acquisition section for test image for glasses, acquiring left-eye and right-eye test images for glasses to solve visual non-uniformity due to differences between right and left eyesights with 3D glasses of the viewer.

### Effects of the Invention

According to the above configuration, when displaying the stereoscopic image configured by the right-eye image and the left-eye image, apropreate parameter value for image quality adjustment to solve the visual non-uniformity caused by the difference between right and left eyesights of the viewer or by the difference between right and left lenses of the 3D glasses can be received independently for the right and the left eyes. Therefore, for example, a user, who has different eyesights between right and left eyes, or a user, who wears 3D glasses with a different refractive index between right and left eyes, can visually recognize both images as an identical image (apart from the difference due to parallax).

### BRIEF DESCRIPTION OF THE DRAWINGS

Fig. 1 is a diagram showing an example of image quality adjustment for stereoscopic image content in a stereoscopic image display apparatus of a first embodiment.
Fig. 2 is a functional block diagram of the stereoscopic image display apparatus of the first embodiment.
Fig. 3 is a diagram showing an example of left-eye test image and the right-eye test image used in the stereoscopic image display apparatus of the first embodiment.
Fig. 4 is a diagram showing another example of left-eye test image and the right-eye test image used in the stereoscopic image display apparatus of the first embodiment.
Fig. 5 is a diagram showing an example of GUI implementing a first reception unit for image quality adjustment of left-eye (right-eye) test image.
Fig. 6 is a diagram showing an example of storage of the image quality adjustment value received by the first reception unit for image quality adjustment of left-eye (right-eye) test image.
Fig. 7 is a diagram showing an example of hardware configuration of the stereoscopic image display apparatus of the first embodiment.
Fig. 8 is a flowchart showing processes in the stereoscopic image display apparatus of the first embodiment.
Fig. 9 is a flowchart showing subsequent processes in the stereoscopic image display apparatus of the first embodiment.
Fig. 10 is a functional block diagram of the stereoscopic image display apparatus of a second embodiment.
Fig. 11 is a diagram showing an example of left-eye test image and the right-eye test image used in the stereoscopic image display apparatus of the second embodiment.
Fig. 12 is a diagram showing another example of left-eye test image and the right-eye test image used in the stereoscopic image display apparatus of the second embodiment.
Fig. 13 is a diagram showing the other example of left-eye test image and the right-eye test image used in the stereoscopic image display apparatus of the second embodiment.
Fig. 14 is a flowchart showing processes in the stereoscopic image display apparatus of the second embodiment.
Fig. 15 is a flowchart showing subsequent processes in the stereoscopic image display apparatus of the second embodiment.
Fig. 16 is a diagram showing the other example of left-eye test image and the right-eye test image used in the stereoscopic image display apparatus of the first embodiment.
Fig. 17 is a diagram showing the other example of left-eye test image and the right-eye test image used in the stereoscopic image display apparatus of the first embodiment.
Fig. 18 is a diagram showing an example of image quality adjustment for stereoscopic image content in a stereoscopic image content reproduction apparatus of a third embodiment.
Fig. 19 is a functional block diagram of the stereoscopic image content reproduction apparatus of the third embodiment
Fig. 20 is a diagram showing an example of image quality adjustment by an image quality adjustment unit for left eye and an image quality adjustment unit for right eye of the stereoscopic image content reproduction apparatus of the third embodiment.
Fig. 21 is a diagram showing an example of input value for each user stored in a storage for each user of the stereoscopic image content reproduction apparatus of the third embodiment.
Fig. 22 is a diagram showing an example of hardware configuration of the stereoscopic image content reproduction apparatus of the third embodiment.
Fig. 23 is a flowchart showing processes in the image content reproduction apparatus of the second embodiment.
Fig. 24 is a functional block diagram of the stereoscopic image content reproduction apparatus of a fourth embodiment
Fig. 25 is a diagram showing an example of an input reception screen for batch input by user in a stereoscopic image content reproduction apparatus of a third embodiment.
Fig. 26 is a flowchart showing processes in the image content reproduction apparatus of the fourth embodiment.

### DETAILED DESCRIPTION OF THE INVENTION

Embodiments of the present invention will be described hereinbelow with reference to the drawings. The present invention is not to be limited to the above embodiments and able to be embodied in various forms without departing from the scope thereof. The first embodiment will mainly describe Claims 1 to 9, and 21. The second embodiment will mainly describe Claims 10 - 20, and 22. The third and four embodiments will mainly describe other examples.

### «First Embodiment»

### <Concept of First Embodiment>

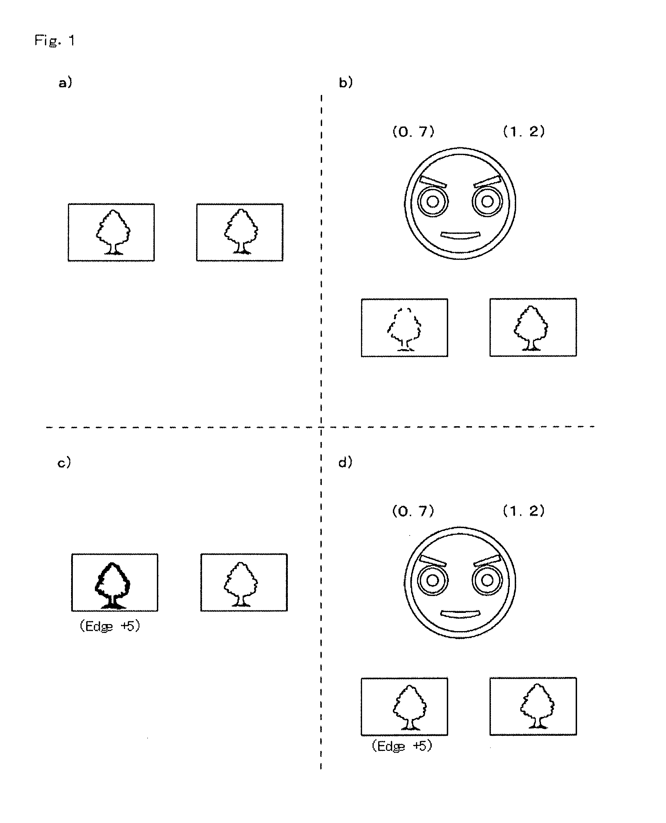

Fig. 1 is a diagram showing an example of image quality adjustment for stereoscopic image content in a stereoscopic image display apparatus of a first embodiment. At the outset, as shown in Fig .1(a), left-eye and right-eye test images, both of which include an identical object, is prepared. Subsequently, both images are atlternatievely displayed, and utilizing a liquid-crystal shutter etc. similar to displaying a stereoscopic image, each of the images are respectively visually recognized by the left eye and the right eye of the viewer. Note that the alternative display is carried out at a low speed such that the repsective images can be visually recognized as different images. When user's left-eye vision is '1.2' and left-eye vision of the user is '0.7', as shown in Fig. 1(b), the right-eye test image is viewed for the user as a vaguely-outlined image.

Moreover, when the refractive index of the right lens of the 3D glasses is exteremely low in comparison with the left lens, the right-eye test image is also viewed for the user as a vaguely-outlined image. Moreover, when one lens has small scratches or loss of transparency, the same occurs. Then, the viewer conpares the vaguely-outlined right-eye test image with the left-eye test image displayed before and after the right-eye test image, and performs, for example, image quality adjustment for edge enhancement of the right-eye test image as shown in Fig. 1(c) (or image quality adjustment for edge reduction of the left-eye test image). Subsequently, as shown in Fig. 1(d), the viewer presses an entry button after confirming that both images are viewed to be the same, and store the image quality adjustment value into a memory etc.

Subsequently, upon displaying the stereoscopic image content, the stereoscopic image display apparatus executes edge enhancement processing etc. for the right-eye test image utilizing the image quality adjustment value stored in the memory. Thus, it is possible to make the viewer who has different vision strengths between right and left eyes visually recognize both images as the same image.

### <Functional Configuration of First Embodiment>

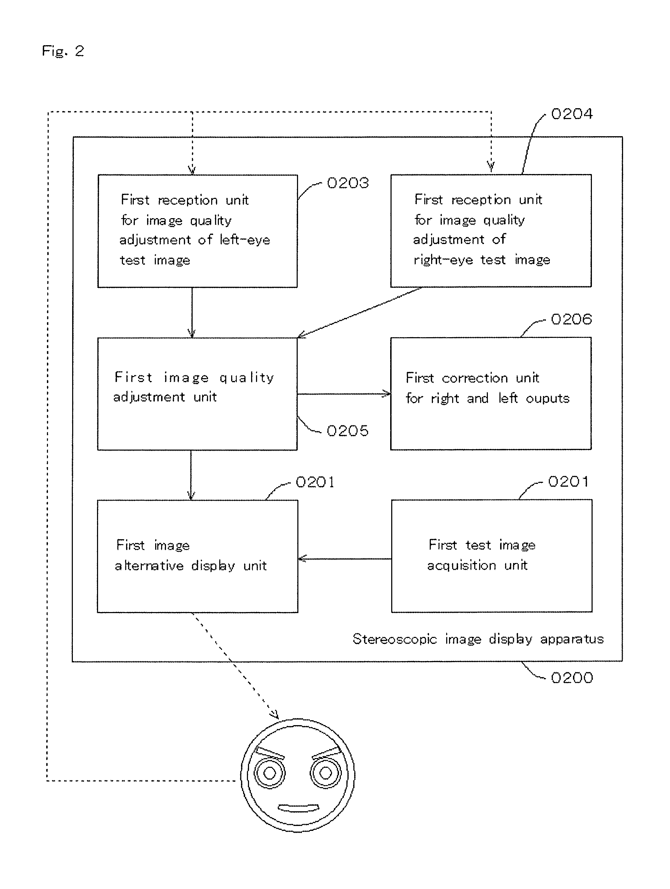

Fig. 2 is a functional block diagram of the stereoscopic image display apparatus of the first embodiment. Note that, the functional block of the integrated interface device can be implemented by hardware, software, or both hardware and software. Specifically, in the case of using a computer, the respective units are implemented by the hardware configured by a CPU, a main memory, a bus, a secondary storage device (e.g., a hard disk or a nonvolatile memory, a storage media such as CD or DVD, or a reading drive for the above media), input device for inputting information, display device, printing device, other peripheral devices, and interface for the other peripheral devices and communication interface; and driver program for controlling the above hardware, other application programs, and application for user interface. Subsequently, the CPU executes operation in accordance with the program loaded into the main memory, so that processing, storing and outputting of the data, inputted through the input device or the interface etc. and stored in the memory of the hard disk, are carried out, and instructions to control the hardware and software are generated. Moreover, the present invention can be implemented not only as an apparatus but also as a method thereof. Moreover, a portion of such inventions may be configured as software. Furthermore, a software product used for causing a computer to execute the software, and the recording medium, in which the software is installed, should be included in the technical scope of the present invention (the same applies throughout the entire specification).

As shown in Fig. 2, a 'stereoscopic image display apparatus' (0200) of the first embodiment comprises a 'first test image acquisition unit' (0201), a 'first image alternative display unit' (0202), a 'first reception unit for image quality adjustment of left-eye test image' (0203), a 'first reception unit for image quality adjustment of right-eye test image' (0204), a 'first image quality adjustment unit' (0205), and a 'first correction unit for right and left ouputs' (0206).

The 'first test image acquisition unit' (0201) has a function of acquiring left-eye and right-eye test images, both of which at least partially include an identical object for adjusting right and left image ouputs to solve visual non-uniformity due to differences between right and left eyesights of a viewer of stereoscopic content image, and can be implemented by a CPU, a main memory, various input/output mechnism such as an I/O (input/output) port, and a first test image acquisition program. Moreover, the 'left (right)-eye test image' at lease partially includes an identical object for adjusting right and left image ouputs to solve visual non-uniformity due to differences between right and left eyesights of a viewer of stereoscopic content image.

The visual non-uniformity is caused by 'differences in vision properties between right and left naked eyes of a viewer' such as differences in viewer's vision etc, or 'differences in lens' properties or conditions between right and left lenses of 3D glasses' such as differences in refractive index between the right and left lenses of 3D glasses, and in such circumstances, the visual non-uniformity is caused when wearing the 3D glasses.

More specifically, the 'differences in vision properties between right and left eyes' means, for example, due to the differences in viewer's vision or color blindness or astigmatic vision of one eye (or differen level of color blindness or astigmatic vision of both eyes). The 'differences in lens' properties or conditions between right and left lenses' means the differences in refractive index between the right and left lenses (e.g., Abbe number is different), differences in transparency or color between the right and left lenses, or differences due to scratches or dirt on the one lens.

Moreover, in order to solve the visual non-uniformity, the first test image acquisition unit may further comprise a first acquisition section for test image for naked eyes, acquiring left and right test images for naked eyes to solve visual non-uniformity due to differences between right and left eyesights with naked eyes of the viewer. Moreover, the first test image acquisition unit may further comprise a first acquisition section for test image for glasses, acquiring left and right test images for glasses to solve visual non-uniformity due to differences between right and left eyesights with 3D glasses of the viewer. Note that the left and right test images for naked eyes and the left and right test images for glasses may be shared.

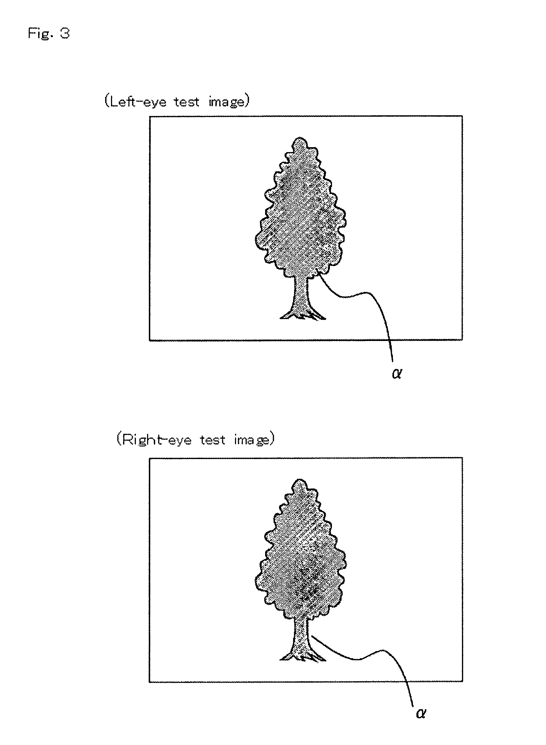

Fig. 3 is a diagram showing an example of left-eye test image and the right-eye test image. As shown in Fig. 3, the left-eye and right-eye test images at least partially include an identical object α. Moreover, the entire object of both images may be identical. Moreover, the identical objects of both images, which is alternatively displayed by the after-mentioned configuraiton and is visually recognized by the left and right eyes of the viewer as different images, is visually recognized as the vaguely-outlined image for the eye of low vision when visions of the left and right eyes are different. Moreover, when the identical objcet has the same color in the left and right images such as red or green, the viewer of color blindness visually recognize one of them as different color. Moreover, when differences in refractive index or color between the right and left lenses of 3D glasses exsits, the same occurs. Then, the viewer carries out the image quality adjustment such that the identical object is viewed as the same.

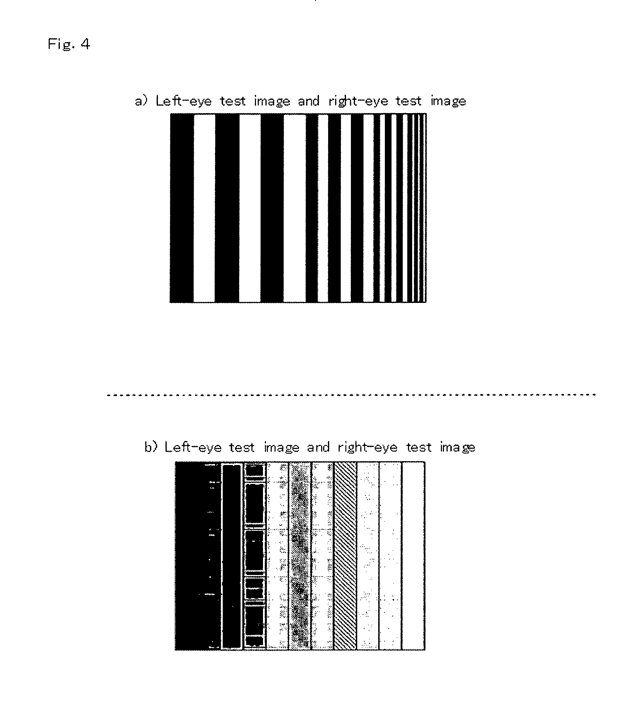

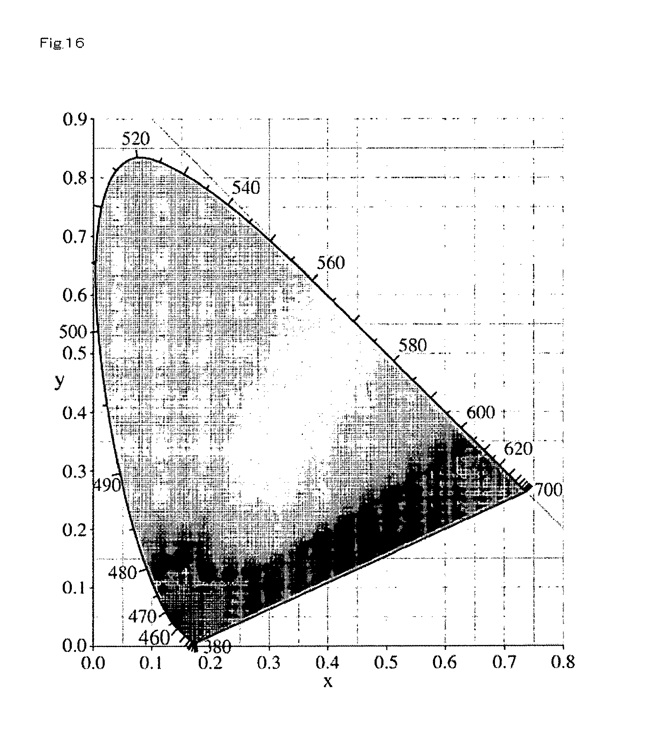

Moreover, the left-eye test image and the right-eye test image may have geometric patterns in addition to the natural image of Fig. 3. For example, as shown in Fig. 4(a), an image with gradually-varying stripe (so-called Sweep image), of which stripe width gradually varies, may be used as the object in the left-eye and right-eye test images, or as shown in Fig. 4(b), an image with gradually-varying color, of which color gradually varies, may be used as the object in the left-eye and right-eye test images. In the an image with gradually-varying stripe of Fig. 4(a), since the stripe width indicates image frequency, the after-mentioned first reception unit for image quality adjustment of left (right)-eye test image designates a stripe viewed to not be identical, so that it is possible to designate the image frequency area to be adjusted, thereby executing the image quality adjustment. Moreover, by utilizing the image with gradually-varying color of Fig. 4(b), the after-mentioned first reception unit for image quality adjustment of left (right)-eye test image designates a color viewed to not be identical, so that it is possible to designate the color area to be adjusted, thereby executing the image quality adjustment. Moreover, as another example of the image with gradually-varying color, the xy chromaticity diagram of Fig. 16 may be used. Similar to the image with gradually-varying color of Fig. 4(b), by utilizing the xy chromaticity diagram, it is possible to designate the color area to be adjusted, thereby executing the image quality adjustment.

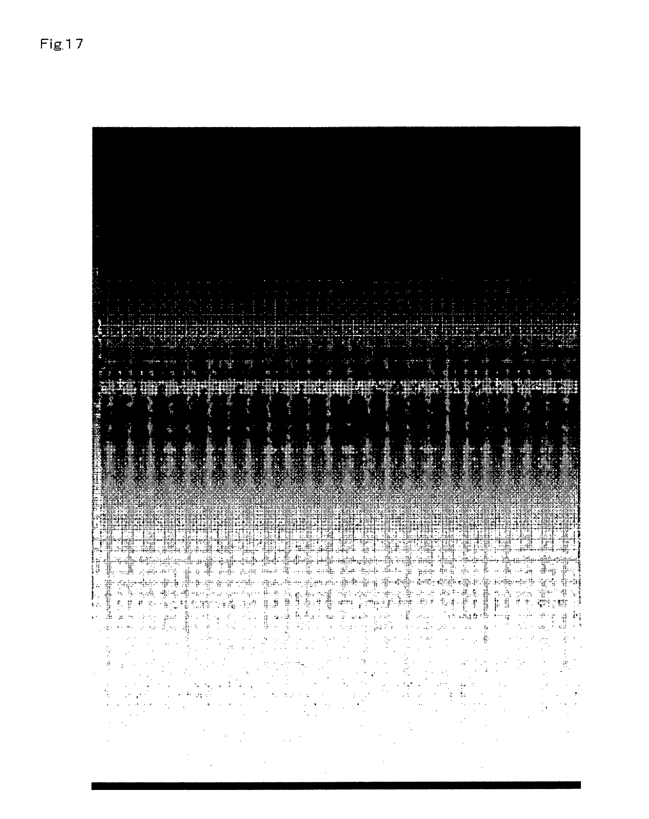

Moreover, as other left-eye and right-eye test images, a RAMP image of Fig. 17, in which one or more tones of RGB values gradually varies, may be used. Since such RAMP image indicates gamma properties of image, the after-mentioned first reception unit for image quality adjustment of left (right)-eye test image can execute gamma correction, thereby executing the image quality adjustment such the right and left images are viewed as the same image.

Moreover, the left-eye and right-eye test images may be preliminarily stored in a HDD etc. of the apparatus, or may be appropriately stored in a server on the network, and acqruired via the network. Moreover, the user may register any test image.

The 'first image alternative display unit' (0202) has a function of alternately displaying the acquired left-eye and right-eye test images at a low speed without persistence of vision, and can be implemented by a CPU, a main memory, a graphic accelerator, a VRAM, a display apparatus, and a first image alternative display program. Note that the low speed without persistence of vision may be appropriately set to, for example, one second. Moreover, the speed may be set by the user. Subsequently, both images are atlternatievely displayed, and utilizing a liquid-crystal shutter etc. similar to displaying a stereoscopic image, each of the images are visually recognized by the left eye and the right eye of the viewer separately. Then, the alternative display is executed at a speed without the persistence of vision of preceeding image in the viewer's eye, the left-eye test image is visually recognized as one image in the left eye, and the right-eye test image is visually recognized as one image in the right eye.

Moreover, the first image alternative display unit may further comprise a 'first image alternative display section in synchronization with glasses'. The 'first image alternative display section in synchronization with glasses' has a function of alternately displaying the left and right test images for glasses by synchronizing with switching cycle of light transmission/light interception of a shutter of the 3D glasses when the 3D glasses the viewer wears has a shutter function. Thus, it is possible to make the viewer wearing 3D glasses visually recognize the left-eye and right-eye test images accurately for each of left eye and right eye.

Moreover, the right-eye/left-eye test images may be inputted to right and left naked eyes of the viewer without using the parallax barrier or the lenticular lens. In this case, the left-eye test image is divided into reed shapes, and the reed-shaped left-eye test image and a reed-shaped black image are alternatively arranged, thereby generating one image. Subsequently, another image is also generated from the right-eye test image in the same manner. Subsequently, the generated images are displayed at the speed without the persistence of vision of preceeding image in the viewer's eye, thereby making the right and left eyes visually recognize the images separately without the 3D glasses.

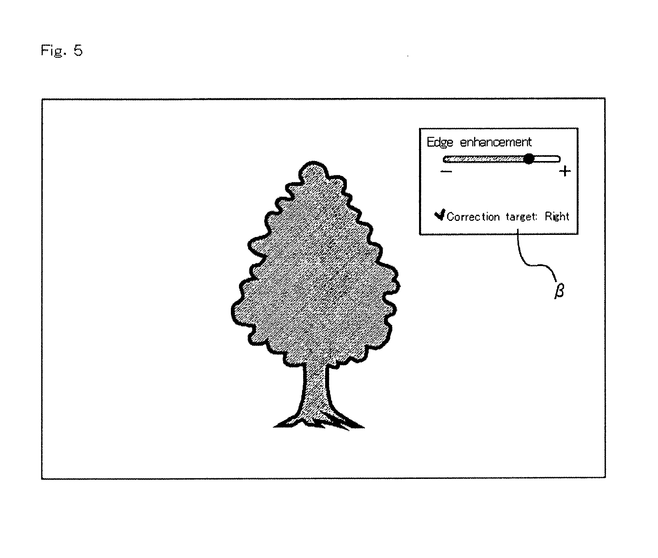

The 'first reception unit for image quality adjustment of left-eye test image' (0203) has a function of receiving an image quality adjustment from the viewer, such that the identical object in the left-eye test image can be viewed to be identical with the object in the right-eye test image, and can be implemented by a CPU, a main memory, a display apparatus, a user input device such as a keyboard or a mouse, and first reception program for image quality adjustment of left-eye test image. Specifically, as shown in Fig. 5, a GUI (Graphical User Interface) β for image quality adjustment is displayed on the screen, thereby receiving the image quality adjustment value inputted by the user input device. The image quality adjustment value is used in real time by the after-mentioned first image quality adjustment unit for adjusting the left-eye test image being alternatively displayed. Thus, it is possible to check that the left-eye test image after adjustment is viewed to be identical with the right-eye test image being alternatively displayed.

Moreover, the processing of the image quality adjustment is not limited to the edge enhancement, and may be any processing such as brightness enhancement or RGB adjustment. Note that this processing should be image quality adjustment to make the images, which are visually recognized as different images due to the visual feature difference, to be viewed as the same image.

The 'first reception unit for image quality adjustment of right-eye test image' (0204) has a function of receiving an image quality adjustment from the viewer, such that the identical object in the left-eye test image can be viewed to be identical with the object in the left-eye test image. Note that the first reception unit for image quality adjustment of right-eye test image has the same function and configuration as those of the first reception unit for image quality adjustment of left-eye test image, excluding the received adjustment target, so that description will be omitted. In the first embodiment, the input for image quality adjustment for the right and left images are independently received. In the image quality adjustment processing, the image quality adjustment for both right and left images, or for only one image may be received. In the latter case, one of the components may be omitted. The reason for this is that, for example, when the vision of the left eye of the viewer is low, the edge enhancement for the left-eye test image or the edge reduction for the right-eye test image may be carried out.

The 'first image quality adjustment unit' (0205) has a function of adjusting the left-eye and/or right-eye test images according to the image quality adjustment from the viewer received by the first reception unit for image quality adjustment of left-eye test image and/or the first reception unit for image quality adjustment of right-eye test image, and can be implemented by a CPU, a main memory, a graphic accelerator, a VRAM, and a first image quality adjustment program. Note that, as described above, the image quality adjustment may include the edge enhancement, the brightness adjustment, or RGB value adjustment. Moreover, the processing details are well-known technologies, so that description will be omitted. Moreover, in the stereoscopic image display apparatus of the first embodiment, the image quality adjustment received by the first reception unit for image quality adjustment of left-eye test image is executed for the left-eye test image, and the image quality adjustment received by the first reception unit for image quality adjustment of right-eye test image is executed for the right-eye test image. Therefore, the image quality adjustment is independently received and exeucted.

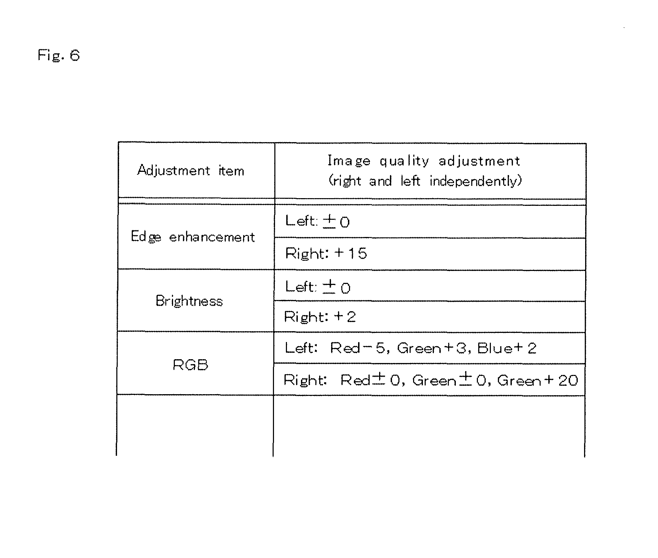

Moreover, as described above, the image quality adjustment is executed in real time for the left-eye/right-eye test image being alternatively displayed. Thus, it is possible to check that the left-eye test image after adjustment is viewed to be identical with the right-eye test image being alternatively displayed. Subsequently, as shown in Fig. 6, the finally-determined parameter value for the image quality adjustment for the respective right/left images are independently stored into the memory.

The 'first correction unit for right and left ouputs' (0206) has a function of correcting the right and left ouputs of the stereoscopic content image according to the image quality adjustment, received from the viewer and used by the first image quality adjustment unit, and can be implemented by a CPU, a main memory, a graphic accelerator, a VRAM, a display appratus, and a first correction program for right and left ouputs. Specifically, the stereoscopic content image is configured by a pair of images, which have subtle differences between the right-eye and left-eye images to cause parallax. Therefore, the first correction unit for right and left ouputs utilizes the parameter value for the image quality adjustment for the right/left images stored as shown in Fig. 6, thereby independently executing the image quality adjustment for the respective right-eye and left-eye images configuring the stereoscopic content image.

Moreover, when the stereoscopic content image is stored in the storage medium such as a recorded image content, the parameter value for the image quality adjustment is added to the content image data as management information. Moreover, on the basis of the management information, content after image quality adjustment may be coded and stored.

As described above, before an actual stereoscopic image is displayed, left-eye and right-eye test images both of which include an identical object, are alternately displayed at a comparatively low speed, and utilizing a liquid-crystal shutter etc. similar to displaying a stereoscopic image, each of the images are respectively visually recognized by the left eye and the right eye of the viewer as different images, and input for image quality adjustment can be received independently for the right and the left so that the identical object in both of the images can be viewed to be identical by the viewer. Then, using the received image quality adjustment parameter value, image quality adjustment for each of the right-eye image and left-eye image configuring the stereoscopic content image is independently performed. Therefore, for example, a user, who has different eyesights between right and left eyes, or a user, who wears 3D glasses with a different refractive index between right and left eyes, can visually recognize both images as identical images (apart from the difference due to parallax).

### <Other Example>

Moreover, the stereoscopic image display apparatus of the other example can have the following configuration to store the appropriate image quality adjustment parameter value with respect to each viewer, thereby executing image quality adjustment of the stereoscopic content image for each viewer. Specifically, in addition to the above components, the 'stereoscopic image display apparatus' further comprises a 'first storing unit with respect to each user' and a 'first reception unit for input of user identification information', and the 'first correction unit for right and left ouputs' executes the following processing.

The 'first storing unit with respect to each user' has a function of storing adjustment information for right and left image qualities correlated with user identification information for identifying the user, and can be implemented by a flash memory, a HDD (Hard Disk Drive), and other storage medium. Specifically, for example, upon starting acquisition and storage of image quality adjustment information for the right and left images, the user identification information is acquired. Note that the acquisition is not limited, and the user identification information such as user's name may be inputted by the user via the GUI, or when the input device for each user can be used, for example, when a mobile phone can be used as the user input device, the identification information of the mobile phone may be acquired as the user idenfication information. Subsequently, the acquired user identification information 'Usr001' and the image quality adjustment information 'left edge intensity: +9' are correlated and stored in the flash memory.

The 'first reception unit for input of user identification information' has a function of receiving an input of user identification information, and can be implemented by a CPU, a main memory, a user input device such as a keyboard or a mouse, and first reception program for input of user identification information. Specifically, before the stereoscopic content image is displayed, the GUI for receiving input of the user name (user identification information) is displayed on the display screen, or a GUI for selecting the registered user identification information by pull-down menu or a check list is displayed. Moreover, when the input device for each user can be used, the identification information transmitted from the input device is received as the user identification information. Subsequently, the first correction unit for right and left ouputs searches the first storing unit with respect to each user by utilizing the received user identification information, thereby executing the correction of right and left ouputs on the basis of the image quality adjustment information for the right and left images.

Moreover, for example, when a special 3D glasses supplied by a device manufacturer or a general 3D glasses supplied by a third party can be used, the appropriate image quality adjustment parameter value may be stored with respect to each 3D glasses, thereby executing image quality adjustment of the stereoscopic content image according to the 3D glasses to be worn. Specifically, in addition to the above components, the 'stereoscopic image display apparatus' further comprises a 'first storing unit with respect to each 3D glasses' or a 'first acquisition unit for 3D glasses identification information', and the 'first correction unit for right and left ouputs' executes correction of the right and left ouputs of the stereoscopic content image on the basis of the adjustment information for right and left image qualities, correlated with 3D glasses identification information for identifying the 3D glasses. Note that the respective components are the same excluding the difference between the user identification information and the 3D glasses identification information, so that description will be omitted.

Moreover, the 3D glasses worn by the viewer may has a function of close-range wireless communication with the stereoscopic image display apparatus of this example. In this case, the first acquisition unit for 3D glasses identification information acquires the 3D glasses identification information stored by the 3D glasses via the close-range wireless communication <Hardware Configuration of First Embodiment>

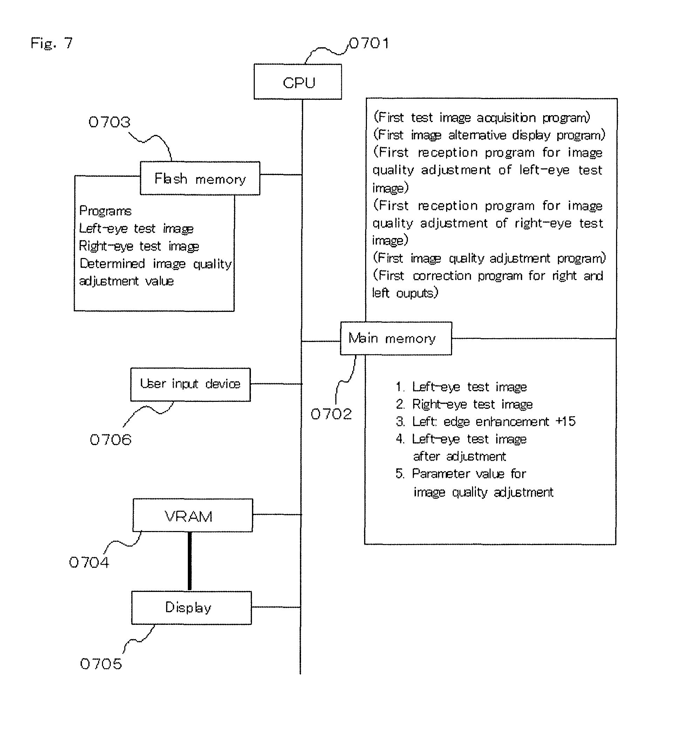

Fig. 7 is a diagram showing an example of hardware configuration of the stereoscopic image display apparatus of the first embodiment. The operation of the hardware components in the acquisition of the parameter value for the image quality adjustment and the image quality adjustment will be described with reference to Fig. 7. As shown in Fig. 7, the stereoscopic image display apparatus is provided with a 'CPU' (0701), and a 'main memory' (0702), thereby executing various calculations and implementing the first test image acquisition unit, the first image quality adjustment unit, the first correction unit for right and left ouputs, and other components.

Moreover, the stereoscopic image display apparatus is provided with a 'flash memory' (0703) for storing various data and programs, a 'VRAM' (0704) and a 'display device' (0705) for implementing the first image alternative display unit, and for displaying other various images and information, and a 'user input device' (0706) for implementing the first reception unit for image quality adjustment of left-eye test image and/or the first reception unit for image quality adjustment of right-eye test image. Moreover, a 'connection circuit for external divce' and a 'internet connction circuit' for connection with the external devices may be provided. These components are mutually connected through the data communication path of 'system bus', thereby carrying out transmission/reception and processing of the information.

Moreover, the programs are loaded into the 'main memory', and the 'CPU' refers to the program and executes the various calculations. Moreover, a plurality of addresses are assigned to the 'main memory' and the 'flash memory', and in the calculation by the 'CPU', address specification and access to the stored data are carried out, thereby executing the calculation by utilizing the data.
At the outset, for establishment of the stereoscopic image display apparatus of the first embodiment, program for implementing the processing by the above components is written and stored in the 'flash memory'. Moreover, the left-eye and right-eye test images, both of which include the identical objects, as shown in Figs. 3 and 4 are also stored in the 'flash memory', thereby establishing of the stereoscopic image display apparatus of the first embodiment. Subsequently, when the input to start setting the image quality adjustment parameter value is received via the 'user input device', the various programs are loaded into the 'main memory'. The 'CPU' interprets the first test image acquisition program, and according to the interpretation result, acquires the right-eye and left-eye test images from the 'flash memory', and stores them at the address 1, ..., 2, ... in the 'main memory'. Subsequently, the 'CPU' interprets the first image alternative display program, and according to the interpretation result, for example, transmits the left-eye test image to the 'VRAM' and displays it on the 'display'. Subsequently, the other image such as the right-eye test image is transmitted to the 'VRAM' and is displayed on the 'display' at a predetermined timing, where the persistence of vision is not caused. Subsequently, the above processing is repeated, thereby alternately displaying the left-eye and right-eye test images on the 'display' at the predetermined switching timing. Note that this switching timing may be preliminarily set by the first image alternative display program, or may be set by the user by utilizing the stored value in the 'flash memory' as the switching timing value.
Subsequently, the 'CPU' interprets the first reception program for image quality adjustment of left-eye test image and/or first reception program for image quality adjustment of right-eye test image, and according to the interpretation result, waits the input of image quality adjustment value. At this point, for example, the GUI (e.g., slider bar) for variying the edge intensity, brightness, and RGB value etc. may be displayed on the 'display' by superimposing it on the left-eye and right-eye test images being alternatively displayed. Subsequenty, the viewer checks the left-eye and right-eye test images, being alternatively displayed, through the left eye and right eye respectively, by utilizing the glasses with liquid-crystal shutter. When viewing the left-eye and right-eye test images being alternatively displayed, for example, if the left-eye test image is viewed to be a vaguely-outlined image due to poor vision of the left eye, the viwer designates the left-eye test image via the 'user input device' by utilizing the GUI and operates to enahnce the edge intensity of the left-eye test image. Meanwhile, the viwer can designate the right-eye test image via the 'user input device' by utilizing the GUI and moves the slider bar for adjusting edge intensity to minus direction to reduce the edge intensity of the right-eye test image. Subsequently, the inputted designation information of the image quality adjustment target and the image quality adjustment value are stored at the address 3, ..., 4, ... in the 'main memory'.

Subsequently, the 'CPU' interprets the first image quality adjustment program, and according to the interpretation result, for example, executes the image quality adjustment such as the edge enhancement for the left-eye test image by utilizing the image quality adjustment value stored at the address 3 in the 'main memory'. Subsequently, the image is stored at the address 4 in the 'main memory' as the image after adjustment, and when the left-eye test image is alternatively displayed, this left-eye test image after adjustment is used for the alternative display (for example, when there are a plurality of images, the latest image is used). Subsequently, when receiving the information indicating that the object in the left-eye and right-eye test images are viewed as the same from the viewer, for example, when receiving the input information of determination via the 'user input device', the image quality adjustment value for the respective test images at the point is written and stored into the 'flash memory'. Moreover, when the input to start setting the image quality adjustment parameter value is received, the ID information to identify the viewer is inputted, the image quality adjustment parameter value may be correlated with the viewer ID, and stored into the 'flash memory'.

As described above, the image quality adjustment parameter for the respective right and left images to solve visual non-uniformity due to differences between right and left eyesights of the viewer can be acquired. Subsequently, when receiving the operation input to start displaying actual stereoscopic content image via the 'user input device', the first correction program for right and left ouputs is loaded into the 'main memory'. Subsequently, the 'CPU' interprets the first correction program for right and left ouputs, and according to the interpretation result, the image quality adjustment parameter value for the respective right and/or left images stored in the 'flash memory' is read out and stored at the address 5... in the 'main memory'. Subsequently, the edge enhancement using the image quality adjustment parameter value stored at the address 5... in the 'main memory' is executed for the right and/or left images configuring the stereoscopic content image, and the image is transmitted to the 'VRAM', thereby displaying the stereoscopic image on the 'display'. Moreover, when using the lenticular lens the stereoscopic image, the right and left images are divided into the reed shapes, and the reed-shaped left-eye test images are alternatively arranged, and transmitted to the 'VRAM', thereby displaying on the 'display'.

### <Processing Flow of First Embodiment>

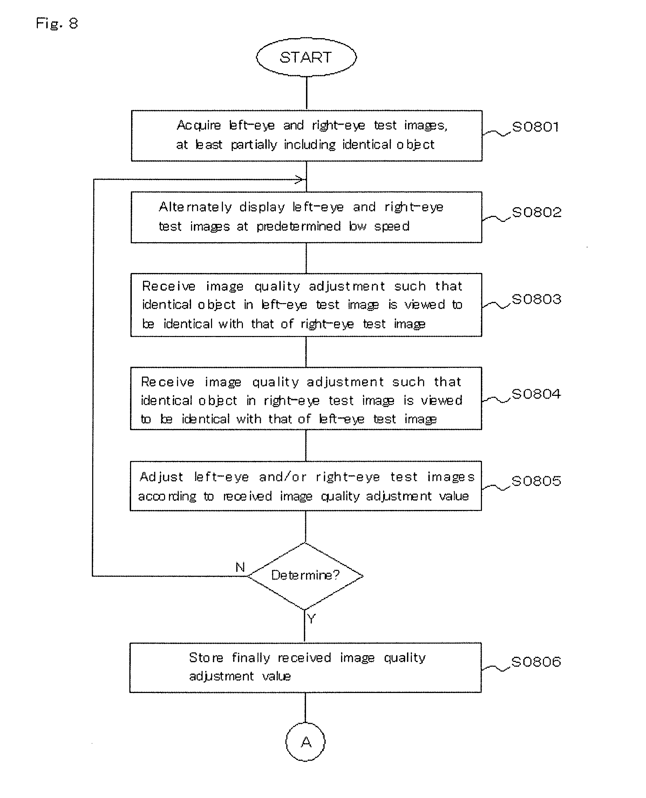

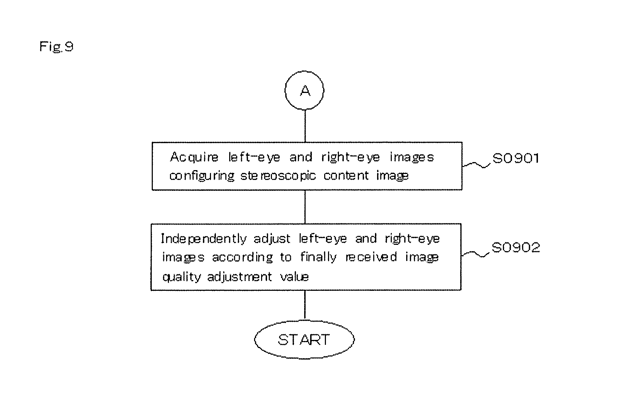

Figs. 8 and 9 are flowchart of the stereoscopic image display apparatus of the first embodiment. Note that, the following steps may be executed by the respective hardware configurations of a computer as above, or may configure a program, which is stored in a medium and is for controlling the computer. As shown in Fig. 8, the left-eye and right-eye test images, both of which at least partially include the identical objects, is acquired from the flash memory (step S0801), and the left-eye and right-eye test images are alternatively displayed at a predetermined low speed, where the persistence of vision of preceeding image in the viewer's eye does not occur (step S0802). Subsequently, the image quality adjustment is received, such that identical object in left-eye test image being alternatively displayed is viewed to be identical with that of right-eye test image (step S0803) and/or the image quality adjustment is received, such that identical object in right-eye test image being alternatively displayed is viewed to be identical with that of left-eye test image (step S0804). Subsequently, the image quality adjustment is execued, such that identical object in right-eye test image is viewed to be identical with that of left-eye test image according to the image quality adjustment received from the viewer by the steps S0803 and/or S0804 (step S0805). Subsequently, the alternative display from the step S0802 by utilizing the image after image quality adjustment, and the reception of the image quality adjustment from the viewer are repeated, thereby storing the finally received image quality adjustment value indicated by the determination input by the viewer (step S0806). Subsequently, as shown in Fig. 9, upon displaying the stereoscopic content image, the left-eye and right-eye images configuring the stereoscopic content image are acquired (step S0901). Subsequently, according to the image quality adjustment received from the viewer, which has been used in the steps S0803 and/or S0804, and stored in the step S0806, the image quality adjustments of the left-eye and right-eye images are executed, thereby displaying the image on the display (step S0902).

### <Brief Description of Effects of First Embodiment>

As described above, before an actual stereoscopic image is displayed, left-eye and right-eye test images both of which include an identical object, are alternately displayed at a comparatively low speed, and utilizing a liquid-crystal shutter etc. similar to displaying a stereoscopic image, each of the images are respectively visually recognized by the left eye and the right eye of the viewer as different images, and input for image quality adjustment can be received independently for the right and the left so that the identical objects in both of the images can be viewed to be identical by the viewer. Then, using the received image quality adjustment parameter value, image quality adjustment for each of the right-eye image and left-eye image configuring the stereoscopic content image is independently performed. Therefore, for example, a user, who has different eyesights between right and left eyes, or a user, who wears 3D glasses with a different refractive index between right and left eyes, can visually recognize both images as identical images (apart from the difference due to parallax).

Moreover, as described above, since the non-uniformity is reduced, fatigue of eyes and brain upon viewing the stereoscopic content image are reduced.

### «Second Embodiment»

### <Concept of Second Embodiment>

In a second embodiment, similar to the first embodiment, a stereoscopic image display apparatus alternately displays left-eye and right-eye test images, both of which include an identical object before an actual stereoscopic image is displayed, and image quality adjustment using the image quality adjustment information inputted by the viewer, who has viewed the images, is executed. The first difference with the first embodiment is that left-eye and right-eye test images are superimposed on each other and visually recognized by the viewer as one image (e.g., same display manner as that of general display of stereoscopic content image). The second difference is that the left-eye and right-eye test images displayed in the above display manner include an object to emphasize the non-uniformity for the viewer when the left-eye and right-eye test images are superimposed and visually recognized by the viewer. Specifically, for example, in the case of Sweep images with inversed phases (stripe images having different arrangement of white and black stripes), the superimposed test image visually recognized by the viewer has stripes of the same width. Meanwhile, when the left-eye test Sweep image is viewed as a vaguely-outlined image in comparison with the right-eye test Sweep image, the stripe width is not viewed as the same for the viewer, so that it is possible to emphasize that the one eye of the viewer has poor vision or one lens of the 3D glasses has low refractive index.

Since the stereoscopic image display apparatus of the second embodiment has the above feature, for example, by receiving the image quality adjustment for the left-eye test image and/or right-eye test image, such that the stripe width is viewed as the same, and by using the image quality adjustment value for actually displaying the stereoscopic content image, it is possible to have the same effect as that of the first embodiment.

### <Functional Configuration of Second Embodiment>

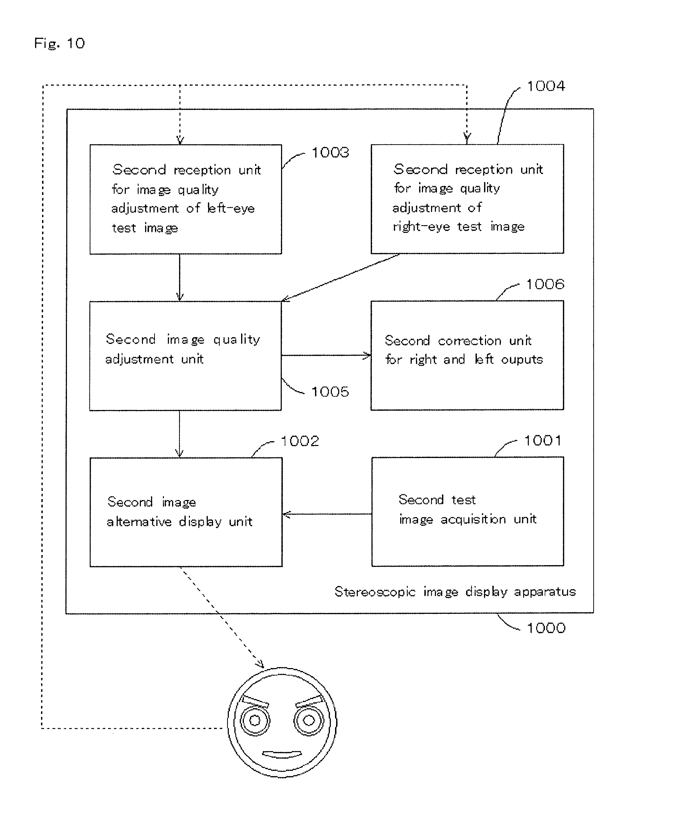

As shown in Fig. 10, a 'stereoscopic image display apparatus' (1000) of the second embodiment comprises a 'second test image acquisition unit' (1001), a 'second image alternative display unit' (1002), a 'second reception unit for image quality adjustment of left-eye test image' (1003), a 'second reception unit for image quality adjustment of right-eye test image' (1004), a 'second image quality adjustment unit' (1005), and a 'second correction unit for right and left ouputs' (1006).

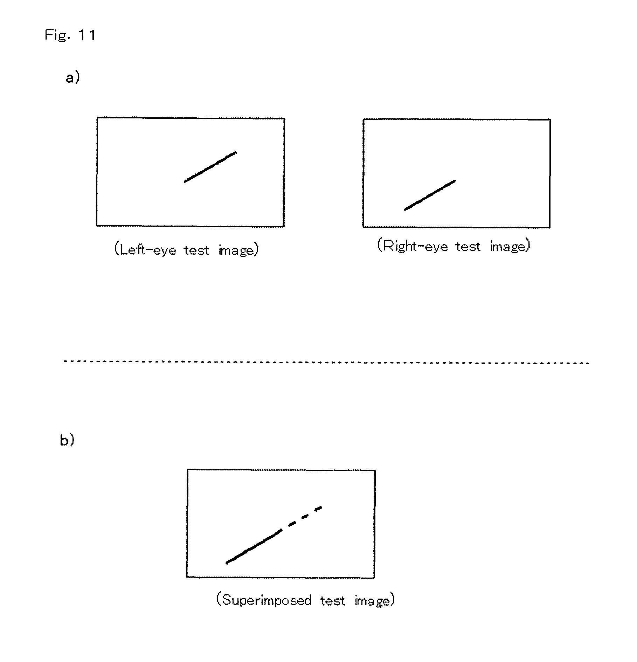

The 'second test image acquisition unit' (1001) has a function of acquiring a left-eye test image having the following features for adjusting right and left image ouputs to solve visual non-uniformity due to difference between right and left eyesights of a viewer of stereoscopic content image, and can be implemented by a CPU, a main memory, various input/output mechnism such as an I/O port, and a second test image acquisition program. Moreover, the 'left-eye test image' at least partially includes a left object to emphasize visual non-uniformity by being superimposed on a right-eye test image, and the 'right-eye test image' at least partially includes a right object to emphasize visual non-uniformity by being synchronized and recognized with the left-eye test image. Specifically, as shown in Fig 11(a), images including a line image in the upper-central portion or lower-central portion are cited. When the images are superimposed and recognized as one image, the line images are recognized as one straight line. Meanwhile, when the one eye of the viewer has poor vision or one lens has low refractive index, as shown in Fig. 11(b), the line (in upper portion) in the left-eye test image is vaguely recognized, thereby emphasizing the visual non-uniformity.

Moreover, to the first embodiment, the second test image acquisition unit may further comprise a second acquisition section for test image for naked eyes, acquiring left-eye and right-eye test images for naked eyes to solve visual non-uniformity due to difference between right and left eyesights with naked eyes of the viewer. Moreover, the second test image acquisition unit may further comprise a second acquisition section for test image for glasses, acquiring left-eye and right-eye test images for glasses to solve visual non-uniformity due to difference between right and left eyesights with 3D glasses of the viewer.

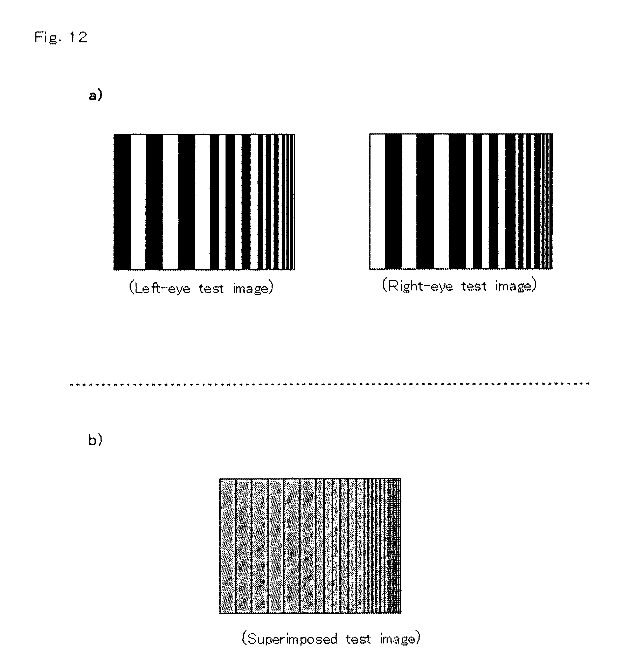

Moreover, the second test image acquisition unit may further comprise a second acquisition section for test image of dispersed pattern, acquiring a left-eye test image including an object of dispersed pattern that complements a right-eye test image without superimposing on each other, and the right-eye test image including an object of dispersed pattern that complements the left-eye test image without superimposing on each other. An example of the dispersed pattern includes a gradually-varying stripe, of which stripe width gradually varies, and an example of the test image includes the Sweep images with inversed phases as shown in Fig. 12(a). When the Sweep images with inversed phases are superimposed and recognized, the images are recognized as an image with stripe of same width as shown in Fig. 12(b). Meanwhile, when the one eye of the viewer has poor vision, since the left-eye test image is vaguely recognized and the stripe widths are different, the stripe width of the images are different. Therefore, in order to solve the emphasized visual non-uniformity, the stereoscopic image display apparatus of the second embodiment receives the image quality adjustment from the viewer independently, such that the images are recognized as an image with the same stripe width by the after-mentioned configuration. Moreover, by using concentric circle images with non-uniform width may be used as the test image, thereby having the same effect as that of the Sweep image.

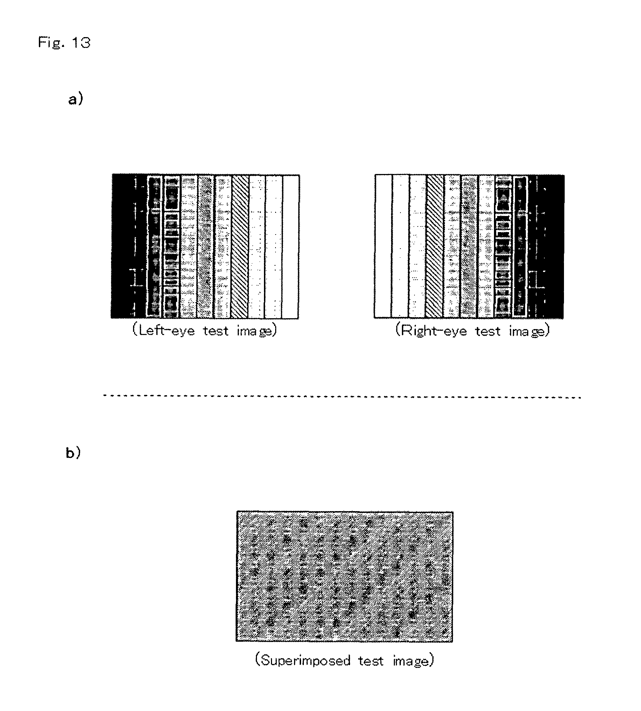

Moreover, another example of the dispersed pattern includes a dispersed pattern of the objects in the right-eye and left-eye test images have a relation of a complementary color with each other. For example, an image with color graduation as shown in Fig. 13(a) is cited. When superimposing colors in a relation of a complementary color, the color is recognized as gray. Therefore, when imposing two images with complementary colors, the image is recognized as gray image as shown in Fig. 13(b). Meanwhile, when the one eye of the viewer has poor vision or color blindness, the test image for the eye is recognized as an image with faint or different color, so that the images are not complemented and are not recognized as gray image. Therefore, in order to solve the emphasized visual non-uniformity, the stereoscopic image display apparatus of the second embodiment receives the image quality adjustment from the viewer independently, such that the images are recognized as the gray image by the after-mentioned configuration.

Moreover, the second test image acquisition unit may further comprise a second acquisition section for color image, acquiring an image with gradually-varying color, of which color gradually varies, as the object in the left-eye and right-eye test images. When the images are symmetric, normally, the superimposed image is recognized as an image with uniformity in color. Meanwhile, when the one eye of the viewer has poor vision, the test image for the eye is recognized as an image with faint color, so that the superimposed image is recognized as an image with non-uniformity in color. Therefore, in order to solve the emphasized visual non-uniformity, the stereoscopic image display apparatus of the second embodiment receives the image quality adjustment from the viewer independently, such that the images are recognized as an image with uniformity in color by the after-mentioned configuration.

Moreover, as the right-eye and left-eye test images, a RAMP image, in which one or more tones of RGB values of the object in the left-eye and right-eye test images gradually varies, may be used. Normally, the superimposed image is recognized as an image with the same tone (median), where the respecive pixels are equalized. When there is a difference in visual feature, the image quality adjustment of gamma value etc. is independently executed, such that the images are viewed as the uniform image.

The 'second image display unit' (1002) has a function of displaying the acquired left-eye and right-eye test images, such that the viewer can recognize the both images viewed from the viewer's right and left eyes as an superimposing test image, and can be implemented by a CPU, a main memory, a VRAM, a display appratus, and a second image display program. Note that the display manner for the superimposed test image is not limited, and for example, when displaying at 120Hz, the switching between the right and left images is executed at intervals of 1/120 sec. Subsequently, both images are alternatively displayed, and utilizing a liquid-crystal shutter etc. similar to displaying a stereoscopic image, each of the images are visually recognized by the left eye and the right eye of the viewer separetely. Then, the images viewed from right and left eyes of the viwer are visually recognized as one superimposed image, and when there is a difference in visual feature, as shown in Figs. 10 to 12, the viewer recognizes the image as an image with emphasized non-uniformity.

Moreover, the second image alternative display unit may further comprise a 'second image alternative display section in synchronization with glasses'. The 'second image alternative display section in synchronization with glasses' has a function of alternately displaying the left-eye and right-eye test images for glasses by synchronizing with switching cycle of light transmission/light interception of a shutter of the 3D glasses when the 3D glasses the viewer wears has a shutter function. Thus, for the viewer with the 3D glasses, it is possible to accurately input the left-eye and right-eye test images into each of the left eye and right eye.

Moreover, other than the stereoscopic viewing using the 3D glasses (liquid-crystal shutter), for example, the right-eye/left-eye test images may be inputted to right and left naked eyes of the viewer by using the parallax barrier or the lenticular lens (so-called naked-eye stereoscopic viewing). In this case, the left-eye and right-eye test images are divided into reed shapes, and the reed-shaped left-eye and right-eye test images are alternatively arranged, thereby generating one image. Thus, for the naked-eye viewer without the 3D glasses, it is possible to display the images, such that the images viewed from the right and left eyes are visually recognized as one image.

The 'second reception unit for image quality adjustment of left-eye test image' (1003) has a function of receiving an image quality adjustment for the left-eye test image from the viewer, such that the visual non-uniformity of the object emphasized by the superimposing test image is solved, and can be implemented by a CPU, a main memory, a display apparatus, a user input device such as a keyboard or a mouse, and a second reception program for image quality adjustment of left-eye test image. Specifically, to the first reception unit for image quality adjustment of left-eye test image of the first embodiment, a GUI for image quality adjustment is displayed on the screen, thereby receiving the image quality adjustment value inputted by the user input device. The image quality adjustment value is used for adjusting the left-eye test image, being displayed, in real time, such that the superimposed imges are visually recognized. Therefore, it is possible for the viewer to adjust, such that the superimposed image is viewed, for example, as an image with uniformity in color or with stripe of same width.

Moreover, the processing of the image quality adjustment is not limited to the edge enhancement, and may be any processing such as brightness enhancement or RGB adjustment. Note that this processing should be image quality adjustment to make the images, which are visually recognized as different images due to the visual feature difference, to be viewed as the same image.

The 'second reception unit for image quality adjustment of right-eye test image' (1004) has a function of receiving an image quality adjustment for the right-eye test image from the viewer, such that the visual non-uniformity of the object emphasized by the superimposing test image is solved. Note that the second reception unit for image quality adjustment of right-eye test image has the same function and configuration as those of the second reception unit for image quality adjustment of left-eye test image, excluding the received adjustment target, so that description will be omitted. In the second embodiment, to the first embodiment, the input for image quality adjustment for the right and left images are independently received.

The 'second image quality adjustment unit' (1005) has a function of adjusting the left-eye and/or right-eye test images according to the image quality adjustment from the viewer received by the second reception unit for image quality adjustment of left-eye test image and/or the second reception unit for image quality adjustment of right-eye test image, and can be implemented by a CPU, a main memory, a graphic accelerator, a VRAM, and a second image quality adjustment program. Note that, as described above, the image quality adjustment may include the edge enhancement, the brightness adjustment, or RGB value adjustment. Moreover, the processing details are well-known technologies, so that description will be omitted. Moreover, in the stereoscopic image display apparatus of the second embodiment, the image quality adjustment received by the second reception unit for image quality adjustment of left-eye test image is executed for the left-eye test image, and the image quality adjustment received by the second reception unit for image quality adjustment of right-eye test image is executed for the right-eye test image. Therefore, the image quality adjustment is independently received and exeucted.

Moreover, as described above, the image quality adjustment is executed in real time for the left-eye/right-eye test image being displayed, such that the images are superimposed and recognized. Thus, it is possible to for the viewer to adjust, such that the superimposed image is viewed, for example, as an image with uniformity in color or with stripe of same width. Subsequently, to the first embodiment, the finally-determined parameter value for the image quality adjustment for the respective right/left images are independently stored into the memory.

The 'second correction unit for right and left ouputs' (1006) has a function of correcting the right and left ouputs of the stereoscopic content image according to the image quality adjustment, received from the viewer and used by the second image quality adjustment unit, and can be implemented by a CPU, a main memory, a graphic accelerator, a VRAM, a display appratus, and a first correction program for right and left ouputs. Specifically, the second correction unit for right and left ouputs utilizes the parameter value for the image quality adjustment for the right/left images stored, thereby independently executing the image quality adjustment for the respective right-eye and eft-eye images configuring the stereoscopic content image. Moreover, when the stereoscopic content image is stored in the storage medium such as a recorded image content, the parameter value for the image quality adjustment is added to the content image data as management information. Moreover, on the basis of the management information, content after image quality adjustment may be coded and stored.

As described above, before an actual stereoscopic image is displayed, the right-eye and left-eye test images are displayed, such that the images viewed from the left eye and right eye are visually recognized as one image for the viewer. Since the superimposed test images includes the object to emphasize the visual non-uniformity for the viewer, it is possible to receive the image quality adjustment from the viewer independently, such that the images are recognized as an image with uniformity. Then, using the received image quality adjustment parameter value, image quality adjustment for each of the right-eye image and left-eye image configuring the stereoscopic content image is independently performed. Therefore, for example, a user, who has different eyesights between right and left eyes, or a user, who wears 3D glasses with a different refractive index between right and left eyes, can visually recognize the both images as an identical image (apart from the difference due to parallax).

Moreover, as described above, since the visual non-uniformity is reduced, fatigue of eyes and brain upon viewing the stereoscopic content image are reduced. Moreover, it is possible to prevent recognition of inappropriate white balance or edge reduction due to the visual non-uniformity.

### <Other Example>

Moreover, to the first embodiment, the stereoscopic image display apparatus of this example can store the appropriate image quality adjustment parameter value with respect to each viewer, and execute image quality adjustment of the stereoscopic content image according to the viewer by having the following configuration. Specifically, in addition to the above components, the 'stereoscopic image display apparatus' of this example comprises 'second storing unit with respect to each user', and a 'second reception unit for input of user identification information', and the second correction unit for right and left ouputs executes the right and left outputs correction on a basis of the adjustment information for right and left image qualities correlated with the user identification information and stored.

The 'second storing unit with respect to each user' has a function of storing adjustment information for right and left image qualities correlated with user identification information for identifying the user. The 'second reception unit for input of user identification information' has a function of receiving an input of the user identification information. Note that these components have the same configuration and processing as those of the first embodiment, so that descriptions are omitted.

Moreover, as described in the first embodiment, the appropriate image quality adjustment parameter value may be stored with respect to each 3D glasses, thereby executing image quality adjustment of the stereoscopic content image according to the 3D glasses to be worn. Specifically, in addition to the above components, the 'stereoscopic image display apparatus' further comprises a 'first storing unit with respect to each 3D glasses' or a 'first acquisition unit for 3D glasses identification information', and the 'first correction unit for right and left ouputs' executes correction of the right and left ouputs of the stereoscopic content image on the basis of the adjustment information for right and left image qualities, correlated with 3D glasses identification information for identifying the 3D glasses. Note that the respective components are the same excluding the difference between the user identification information and the 3D glasses identification information, so that description will be omitted.

Moreover, the 3D glasses worn by the viewer may has a function of close-range wireless communication with the stereoscopic image display apparatus of this example. In this case, the first acquisition unit for 3D glasses identification information acquires the 3D glasses identification information stored by the 3D glasses via the close-range wireless communication

### <Processing Flow of Second Embodiment>

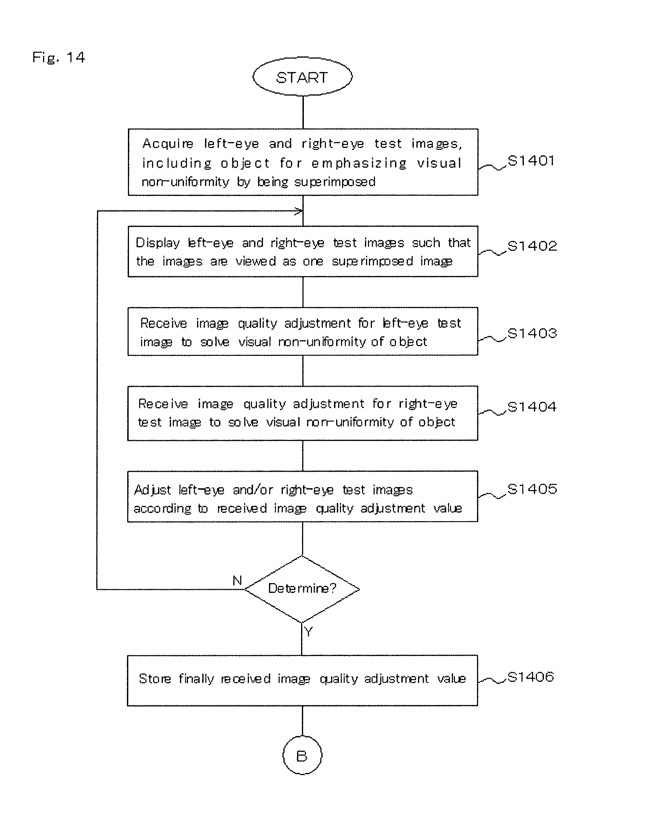

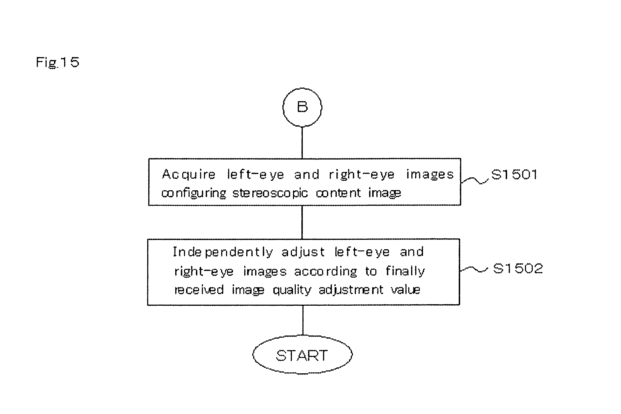

Figs. 14 and 15 are flowchart of the stereoscopic image display apparatus of the first embodiment. Note that, the following steps may be executed by the respective hardware configurations of a computer as above, or may configure a program, which is stored in a medium and is for controlling the computer. As shown in Fig. 14, a left-eye test image, at least partially including a left object to emphasize visual non-uniformity by being superimposed on a right-eye test image, and the right-eye test image, at least partially including a right object to emphasize visual non-uniformity by being synchronized and recognized with the left-eye test image are acquired (step S1401).

Subsequenlty, the acquiried left-eye and right-eye test images are displayed, such that the viewer can recognize the both images viewed from the viewer's right and left eyes as an superimposed test image (step S1402). Subsequently, an image quality adjustment for the left-eye test image from the viewer is received, such that the visual non-uniformity of the object emphasized by the superimposing test image is solved (step S1403) and/or an image quality adjustment for the right-eye test image from the viewer is received, such that the visual non-uniformity of the object emphasized by the superimposing test image is solved (step S1404). Subsequently, the image quality adjustment is execued, such that identical objects in right-eye test image is viewed to be identical with that of left-eye test image according to the image quality adjustment received from the viewer by the steps S1403 and/or S1404 (step S1405). Subsequently, the display of the right-eye and left-eye test images from the step S1402 by utilizing the image after image quality adjustment, and the reception of the image quality adjustment from the viewer are repeated, thereby storing the finally received image quality adjustment value indicated by the determination input by the viewer (step S1406). Subsequently, as shown in Fig. 15, upon displaying the stereoscopic content image, the left-eye and right-eye images configuring the stereoscopic content image are acquired (step S1501). Subsequently, according to the image quality adjustment received from the viewer, which has been used in the steps S1403 and/or S1404, and stored in the step S1406, the image quality adjustments of the left-eye and right-eye test images are executed, thereby displaying the image on the display (step S1502).

### <Brief Description of Effects of Second Embodiment>

As described above, before an actual stereoscopic image is displayed, the right-eye and left-eye test images are displayed, such that the images viewed from the left eye and right eye are visually recognized as one image for the viewer. Since the superimposed test images includes the object to emphasize the visual non-uniformity for the viewer, it is possible to receive the image quality adjustment from the viewer independently, such that the images are recognized as an image with uniformity. Then, using the received image quality adjustment parameter value, image quality adjustment for each of the right-eye image and left-eye image configuring the stereoscopic content image is independently performed. Therefore, for example, a user, who has different eyesights between right and left eyes, or a user, who wears 3D glasses with a different refractive index between right and left eyes, can visually recognize both images as identical images (apart from the difference due to parallax).

Moreover, as described above, since the visual non-uniformity is reduced, fatigue of eyes and brain upon viewing the stereoscopic content image are reduced. Moreover, it is possible to prevent recognition of inappropriate white balance or edge reduction due to the visual non-uniformity.

### «Third Embodiment»

### <Concept of Third Embodiment>

In a third embodiment, it is possible to execute image quality adjustment for right-eye and left-eye images of a stereoscopic content image independently, according to visual differences between user's right eye and left eye. Note that the following 'stereoscopic image content reproduction apparatus' is the same as the 'stereoscopic image display apparatus' of the above embodiments, so that all or a part of the respective components can be added or exchanged with each other.

Therefore, in the third embodiment, a stereoscopic image content reproduction apparatus comprises a stereoscopic image content acquisition unit, acquiring a stereoscopic image content, a left-eye image acquisition unit, acquiring a left-eye image from the acquired stereoscopic image content, a right-eye image acquisition unit, acquiring a right-eye image from the acquired stereoscopic image content, a left-eye image quality adjustment unit, executing image quality adjustment of the left-eye image independently from the right-eye image, a right-eye image quality adjustment unit, executing image quality adjustment of the right-eye image independently from the left-eye image, a left-eye image quality adjustment reception unit, receiving a user input of image quality adjustment of the left-eye image, a right-eye image quality adjustment reception unit, receiving a user input of image quality adjustment of the right-eye image, and an output unit for image after adjustment, outputting images, such that the images after adjustment configures the stereoscopic image content.

Moreover, in addition to the above configuration, the left-eye image quality adjustment reception unit may further comprise a left-eye vision information acquisition section, acquiring user's left-eye vision information based on the user input, and the right-eye image quality adjustment reception unit may further comprise a right-eye vision information acquisition section, acquiring user's right-eye vision information based on the user input. The left-eye image quality adjustment unit may further comprise an adjustment section dependent on left-eye vision, executing adjustment of any one of edge enhancement, brigthness, and gamma value of the left-eye image based on the left-eye vision information, and the right-eye image quality adjustment unit may further comprise an adjustment section dependent on right-eye vision, executing adjustment of any one of edge enhancement, brigthness, and gamma value of the right-eye image based on the right-eye vision information.

Moreover, in addition to the above configurations, the left-eye image quality adjustment reception unit may further comprise a left-eye color vision information acquisition section, acquiring left-eye color vision information of the user based on the user input, and the right-eye image quality adjustment reception unit may further comprise a right-eye color vision information acquisition section, acquiring right-eye color vision information of the user based on the user input. The left-eye image quality adjustment unit may further comprise an adjustment section dependent on left-eye color vision, executing adjustment of color value of the left-eye image based on the left-eye color vision information, and the right-eye image quality adjustment unit may further comprise an adjustment section dependent on right-eye color vision, executing adjustment of color value of the right-eye image based on the right-eye color vision information.

Moreover, in addition to the above configurations, a storing unit for each user, storing user inputs for right-eye and left-eye images correlated with user identification information for identifying the user; and a reception unit for input of user identification information, receiving an input of the user identification information may be comprised. Moreover, the left-eye image quality adjustment unit may further comprise a left-eye image adjustment section for each user, executing image quality adjustment of the left-eye image based on the stored user input for the left-eye image correlated with the inputted user identification information, and the right-eye image quality adjustment unit may further comprise a right-eye image adjustment section for each user, executing image quality adjustment of the right-eye image based on the stored user input for the right-eye image correlated with the inputted user identification information.

Moreover, in a method for operating a stereoscopic image content reproduction apparatus, the method causing a computer to execute a process may comprise; acquiring a stereoscopic image content, acquiring a left-eye image from the acquired stereoscopic image content, acquiring a right-eye image from the acquired stereoscopic image content, executing image quality adjustment of the left-eye image independently from the right-eye image, executing image quality adjustment of the right-eye image independently from the left-eye image, receiving a user input of image quality adjustment of the left-eye image, receiving a user input of image quality adjustment of the right-eye image, and outputting images, such that the images after adjustment configures the stereoscopic image content.

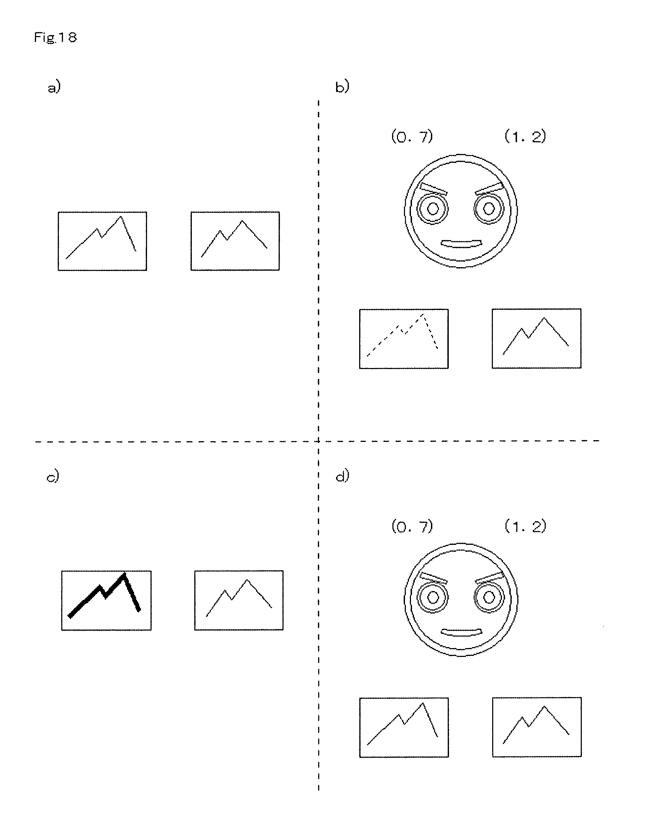

Fig. 18 is a diagram showing an example of image quality adjustment for stereoscopic image content in the stereoscopic image content reproduction apparatus of the third embodiment. As shown in Fig. 18, for example, when the user's left-eye vision is '1.2', and right-eye vision is '0.7', the right-eye image of the stereoscopic image content of Fig. 18(a), viewed by the right eye, is recognized as an vaguely-outlined image of Fig. 18(b) in comparison with the left-eye image (which is originally the same as the fight-eye image). The stereoscopic image content reproduction apparatus of the third embodiment executes the edge enhancement only for the right-eye image as shown in Fig 18(c), such that the both images are viewed as the same in user's visual recognition as shown in Fig. 18(d). Moreover, it is possible to execute the edge reduction only for the left-eye image without adjusting the right-eye image, such that the user can visually recognize that the both images are the same. Thus, the user, who has different vision strengths between right and left eyes, can visually recognize the stereoscopic image content.

### <Functional Configuration of Third Embodiment>

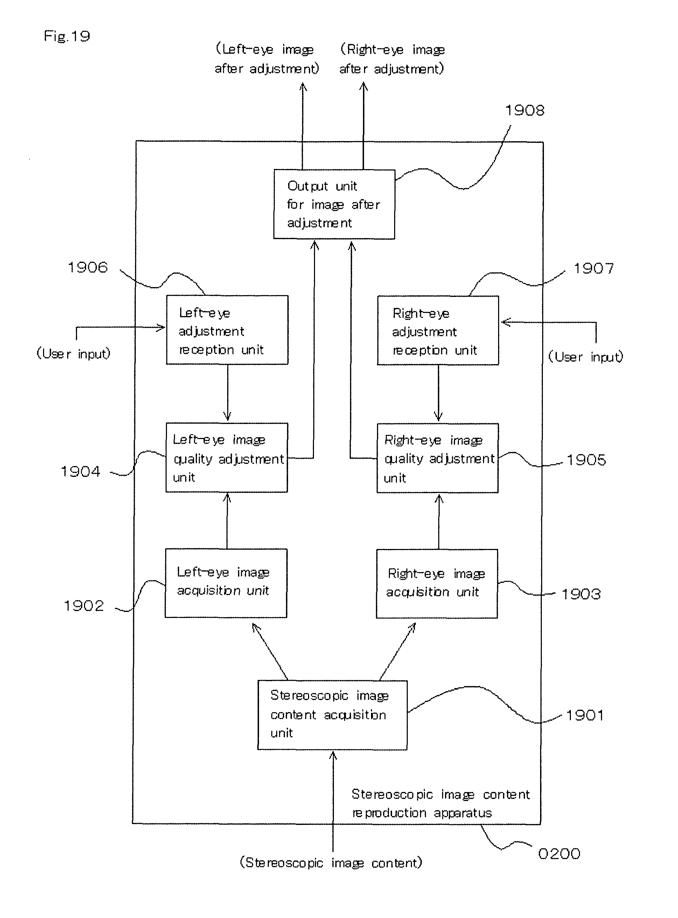

Fig. 19 is a functional block diagram of the stereoscopic image content reproduction apparatus of the third embodiment. Note that, the functional block of the integrated interface device can be implemented by hardware, software, or both hardware and software. Specifically, in the case of using a computer, the respective units are implemented by the hardware configured by a CPU, a main memory, a bus, a secondary storage device (e.g., a hard disk or a nonvolatile memory, a storage media such as CD or DVD, or a reading drive for the above media), input device for inputting information, display device, printing device, other peripheral devices, and interface for the other peripheral devices and communication interface; and driver program for controlling the above hardware, other application programs, and application for user interface. Subsequently, the CPU executes operation in accordance with the program loaded into the main memory, so that processing, storing and outputting of the data, inputted through the input device or the interface etc. and stored in the memory of the hard disk, are carried out, and instructions to control the hardware and software are generated. Moreover, the present invention can be implemented not only as an apparatus but also as a method thereof. Moreover, a portion of such inventions may be configured as software. Furthermore, a software product used for causing a computer to execute the software, and the recording medium, in which the software is installed, should be included in the technical scope of the present invention (the same applies throughout the entire specification).

As shown in Fig. 19, a 'stereoscopic image content reproduction apparatus' (1900) of the third embodiment comprises a 'stereoscopic image content acquisition unit' (1901), a 'left-eye image acquisition unit' (1902), a 'right-eye image acquisition unit' (1903), a 'left-eye image quality adjustment unit' (1904), a 'right-eye image quality adjustment unit' (1905), a 'left-eye image quality adjustment reception unit' (1906), a 'right-eye image quality adjustment reception unit' (1907), and an 'output unit for image after adjustment' (1908).

The 'stereoscopic image content acquisition unit' (1901) has a function of acquiring stereoscopic image content, and can be implemented by a CPU, a main memory, various input/output interfaces, and a stereoscopic image content acquisition program. The 'stereoscopic image content' is content configured by a pair of images, where the right-eye and left-eye images are subtly different to cause parallax. Moreover, when the stereoscopic image content is a movie content, for example, in the movie content, the pair of images, where the right-eye and left-eye images are subtly different, is set as one frame as a predetermined unit, and 30 frames are included in one second. The stereoscopic image content acquisition unit acquires, for example, broadcast content as the stereoscopic image content, or acquire the stereoscopic image content recorded and reproduced by an internal content recorder, an external reproduction device, or a server on the internet.

The 'left-eye image acquisition unit' (1902) has a function of acquiring a left-eye image from the acquired stereoscopic image content, and the 'right-eye image acquisition unit' (1903) has a function of acquiring a right-eye image from the acquired stereoscopic image content. These left-eye image acquisition unit and right-eye image acquisition unit can be implemented by a CPU, a main memory, and a left-eye image acquisition program and right-eye image acquisition program. Specifically, the left-eye and right-eye images, acquired as the stereoscopic image content by the stereoscopic image content acquisition unit, are distinguished, for example, by referring to tag information, and acquired. Moreover, as described above, the the left-eye and right-eye images, configuring the stereoscopic image content, are subtly different by parallax, and image data, which is expressed by RGB value or YUV value, and acquired by decrypting the respective coding data. The stereoscopic image content reproduction apparatus of the third embodiment executes numeric value adjustment respectively for the RGB value or YUV value of the distinguished and acquired left-eye and right-eye images according to the difference between the user's right and left visions.

The 'left-eye image quality adjustment unit' (1904) has a function of executing image quality adjustment of the left-eye image independently from the right-eye image, and the 'right-eye image quality adjustment unit' (1905) has a function of executing image quality adjustment of the right-eye image independently from the left-eye image. The left-eye image quality adjustment unit and right-eye image quality adjustment unit can be implemented by a CPU, a main memory, and a left-eye image quality adjustment program and right-eye image quality adjustment program. Note that the image quality adjustment independently executed for the left-eye image and the right-eye image are not limited, and appropriate image quality adjustment may be selected and set according to the difference in the user's visual features. When the user's left eye has astigmatic vision, the astigmatic effect is reduced in the bright situation, so that the left-eye image quality adjustment unit increases the brightness value of the respective pixels in the left-eye image. Moreover, when the user can recognize only the partial left-eye image due to visual field abnormality of the left eye, the right-eye image quality adjustment unit trims the peripheral portion of the right-eye image according to the effective visual field of the left eye, such that the same portion as the left-eye image is visually recognized.

Moreover, when the user has different vision streghths between the right and left eyes, the image for the low-vision eye is visually recognized as the vaguely-outlined image. The adjustment of edge enhancement, brightness level, or gamma value may be executed for the vaguely-outlined image. Sepcifically, the 'left-eye image quality adjustment unit' may further comprise the adjustment section dependent on left-eye vision, not-indicated by figures, executing adjustment of any one of edge enhancement, brigthness, and gamma value of the left-eye image based on the left-eye vision information, and the right-eye image quality adjustment unit may further comprise the adjustment section dependent on right-eye vision, not-indicated by figures, executing adjustment of any one of edge enhancement, brigthness, and gamma value of the right-eye image based on the right-eye vision information.

Moreover, it is possible to execute the edge reduction only for the other image without adjusting the vaguely-outlined image, such that the user can visually recognize that both images are the same. Moreover, it is possible to determine which of the adjustment, the edge enhancement or the edge reduction, is suitable for the image by analyzing the tag data or image data. When adjusting, for example, the figure image and animation image by analyzing the tag data or image data, the edge enhancement for the vaguely-outlined image is executed, or when adjusting, for example, the landscape image and sports image by analyzing the tag data or image data, the edge reduction for the clearly-outlined image is executed.

Moreover, when one eye of the user is color blindness, for example, 'green is viewed as blue', it is possible to increase the G (green) value of pixels in the image for color-blindness eye, and the color is viewed as green. Moreover, it is possible to change the G value of the pixels in the image for normal eye to the B (blue) value, and the color is viewed as blue. Specifically, the left-eye image quality adjustment unit may further comprise the 'adjustment section dependent on left-eye color vision, not indicated in figures, executing adjustment of color value of the left-eye image based on the left-eye color vision information, and the right-eye image quality adjustment unit may further comprise the adjustment section dependent on right-eye color vision, not indicated in figures, executing adjustment of color value of the right-eye image based on the right-eye color vision information.

Note that the adjustment parameter value used by the adjustment section dependent on left-eye color vision and the adjustment section dependent on right-eye color vision may be fixed value, or may be determined by calculation according to the user information inputted by the after-mentioned 'left-eye image quality adjustment reception unit' and 'right-eye image quality adjustment reception unit'. Moreover, when executing adjusntment according to the user's vision, the viewing distance informaiton may be further acquired, for example, by a sensor or user input, and used for determining the adjustment parameter value. Moreover, when the stereoscopic image content is a movie content configured by a plurality of frames, the image quality adjustment may be exeucted for all frame images. Moreover, the image quality adjustment may be executed by receiving the different user input with respect to each scene (group of frames).

The 'left-eye image quality adjustment reception unit' (1906) has a function of receiving a user input of image quality adjustment of the left-eye image. The 'right-eye image quality adjustment reception unit' (1907) has a function of receiving a user input of image quality adjustment of the right-eye image. These left-eye image quality adjustment reception unit and right-eye image quality adjustment reception unit can be implemented by a CPU, a main memory, input device, GUI (Graphical User Interface), and a left-eye image quality adjustment reception program and the right-eye image quality adjustment reception program. Moreover, the left-eye image quality adjustment reception unit and the right-eye image quality adjustment reception unit receive the user input such as existence of vision feature (e.g., astigmatic eye, vision field abnormality, color blindness, vision difffernce), level of vision feature (e.g., axis angle of astigmatic eye, range or position of vision field abnormality, 1 to 3 level of color blindness, right and left vision), type of vision feature (e.g, ragular or irregular of astigmatic eye, narrowing, partial blindness, or scotoma of vision field abnormality, red-green abnormality or blue-yellow abnormality of color blindness, far-sight or near-sight of vision).

Specifically, the 'left-eye image quality adjustment reception unit' further comprises the 'left-eye vision information acquisition section', not indicated in figures, acquiring user's left-eye vision information based on the user input, and the 'right-eye image quality adjustment reception unit' may further comprise the 'right-eye vision information acquisition section', not indicated in figures, acquiring user's right-eye vision information based on the user input. Note that the 'left-eye vision information' and the "right-eye vision information' indicate visions of right and left eyes, and as described abovd, include information of existence of vision difference, information indicating vision value measured by the Landort ring chart, or information of vision value indicated by Snellen index.

Moreover, the 'left-eye image quality adjustment reception unit' may further comprise the left-eye color vision information acquisition section, not indicated in figures, acquiring left-eye color vision information of the user based on the user input, and the right-eye image quality adjustment reception unit may further comprise a right-eye color vision information acquisition section, not indicated in figures, acquiring right-eye color vision information of the user based on the user input. Note that the 'left-eye color vision information' and 'right-eye color vision information' are information regarding the color visions of the right and left eyes, and as described above, include information of existence of color vision abnormality, and classification informatiton of level and detail of color vision abnormality.

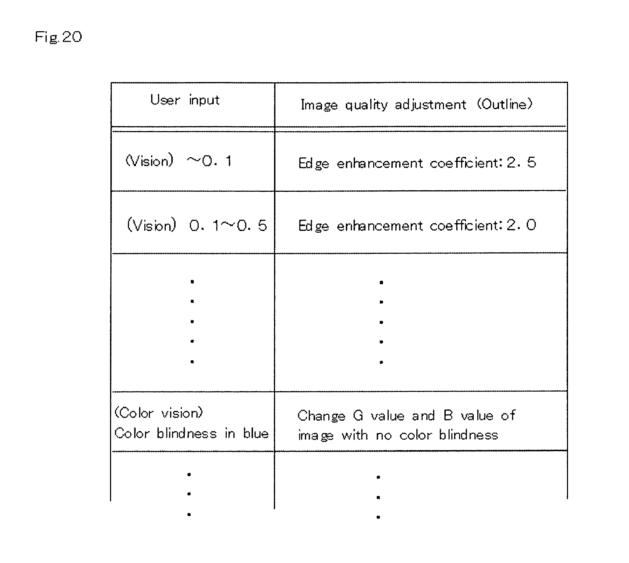

Moreover, when only the existence of user's vision feature abnormality is inputted, the 'left-eye image quality adjustment unit' and the 'right-eye image quality adjustment unit' may execute the image quality adjustment using the fixed parameter value. Moreover, when the numeric value information or classification informaiton indicating the vision feature level is inputted, the parameter value for the image quality adjustment may be determined using a predetermined table or a predetermined formula as shown in Fig. 20, which determine the parameter value of rule according to the numeric value information or the classicification information.

Note that the user input may be executed by directly inputting the above information from the user via the GUI screen etc. Moreover, for example, it is possible to display the astigmatism check chart or Landort ring chart (vision check chart) for checking the vision feature on the display screen, thereby calculating the information using the user input information for the checking. Moreover, when the stereoscopic image content is broadcast program, the user input may be received on a program basis or a channel basis by using the electronic program guide. Moreover, the when receiving the user input before starting broadcast, the input may be stored as a record program information, and the stored user input may be used for the image quality adjustment upon broadcasting. Moreover, for example, an electronic chart information is stored in eye clinic, the user's vision feature indicated by the electronic chart information may be received by the left-eye image quality adjustment reception unit and the right-eye image quality adjustment unit as the user input.

Moreover, the adjustment parameter value for the image quality adjustment may be reset at the end of the content or power-off of the device, and may be calculated again upon next content reproduction according to the user input. Moroever, the parameter may be stored in the storage such as HDD, and read out at every content reproduction.

The 'output unit for image after adjustment' (1908) has a function of outputting images, such that the images after adjustment configures the stereoscopic image content, and can be implemented by a CPU, a main memory, a video processor, VRAM, display, and an output program for image after adjustment. Specifically, as described above, according to the vision information or color vision information of the right and left eyes, the indepnedently adjusted right-eye and left-eye images are alternatively displayed at high speed, thereby enabling the stereoscopic image display. Moreover, by using the lenticular lens, the right-eye and left-eye images after adjustments are divided into the reed shapes, and are alternatively arranged and displayed.

Moreover, before the right-eye and left-eye images arter adjustments are outputted to configure the stereoscopic image content, the images may be arranged and outputted simultaneously, or may be alternatively outputted at low speed. Thus, the user can check that the image quality adjustment has been succesfully executed by checking the images by the respective eyes. Moreover, the image quality adjustment parameter value may be displayed together upon the display.

As described above, in the stereoscopic image content reproduction apparatus of the third embodiment, image quality adjustment for each of the right-eye image and left-eye image configuring the stereoscopic content image is independently performed according to the user's vision feature difference between the right and left eyes. Therefore, for example, a user, who has different eyesights between right and left eyes, or a user, who wears 3D glasses with a different refractive index between right and left eyes, can visually recognize the both images as an identical image (apart from the difference due to parallax).

Moreover, in the stereoscopic image content reproduction apparatus of the third embodiment, for example, at the timing of outputting the right-eye image and left-eye image after the adjustments from the output unit for image after adjustment upon switching from the reproduction display of the 2D image content to the reproduction display of the stereoscopic image content, an icon or a message for indicating the start of the 3D (stereoscopic) display. Moreover, simultaneously, the setting value such as the parameter used for the image quality adjustment may be displayed. Moreover, when switching from the stereoscopic display to the 2D image content, the icon or a message for indicating the start of the 2D image content may be displayed.

Moreover, when the stereoscopic image content is stored in a recording medium as the recorded program content, the image quality adjustment parameter value may be added to as the management information. Moreover, when the image quality adjustment parameter value is calculated with respect to each user, the user ID may be added as the management information. Moreover, when writing the stereoscopic image content data to an optical recording disk, the management information may be recorded along with the content. Moreover, the content after image quality adjustment based on the management information may be coded and recorded in the optical recording disk.

### <Other Example>

Moreover, the stereoscopic image content reproduction apparatus of this example may store the vision information and color vision information of the right and left eyes of the user with respect to each user, so that only inputting the user identification information, the stereoscopic image content, for which the image quality adjustment appropriate for the user is executed, is outputted.

Specifically, in addition to the above configuration, the 'stereoscopic image content reproduction apparatus' of the example comprises the 'storing unit for each user', and the 'reception unit for input of user identification information'. Moreover, the left-eye image quality adjustment unit may further comprise the 'left-eye image adjustment section for each user' and the right-eye image quality adjustment unit may further comprise the 'right-eye image adjustment section for each user'.

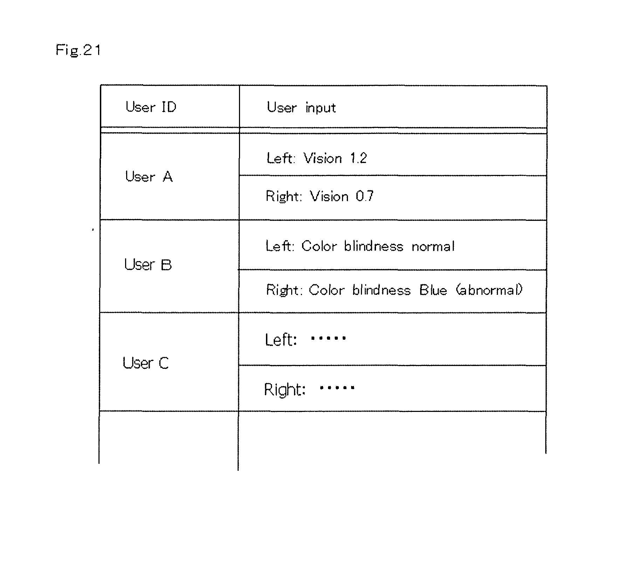

The 'storing unit for each user' has a function of storing user inputs for right-eye and left-eye images correlated with user identification information for identifying the user, and can be implemented by various storage medium such as flash memory and HDD. Fig. 21 is a diagram showing an example of input value for each user stored in storage for each user of the stereoscopic image content reproduction apparatus of the third embodiment. As shown in Fig. 21, for example, as to the user identified by the user identification information A, the user input for the left-eye image 'left-eye vision: 1.2', and the user input for the right-eye image 'right-eye vision: 0.7' are stored. As to the user identified by the user identification information B, the user input for the left-eye image 'left-eye color vision: normal', and the user input for the right-eye image 'right-eye color vision: color blindness in blue' are stored.

The 'reception unit for input of user identification information' has a function of receiving an input of the user identification information, and can be implemented by a CPU, a main memory, and a reception program for input of user identification information. Specifically, for example, the GUI for inputting the user identification information is displayed, and the user identification information inputted to the entry field is received. Moreover, when using a mobile phone as a remote control device, the identification information of the device included in the operation signal from the mobile phone (remote control device) is received as the user identification information. By using the received user identification information, it is possible to select the user input to execute the image quality adjustment for each of the left-eye image and the right-eye image indepndently.

The 'left-eye image adjustment section for each user' has a function of executing image quality adjustment of the left-eye image based on the stored user input for the left-eye image correlated with the inputted user identification information, and the 'right-eye image adjustment section for each user' has a function of executing image quality adjustment of the right-eye image based on the stored user input for the right-eye image correlated with the inputted user identification information. Specifically, when the 'user A' is inputted by the user identification information input unit, with reference to a table of Fig. 21, the user input for the left-eye image 'left-eye vision: 0.1', and the user input for the right-eye image 'right-eye vision: 1.2' are acquired. Subsequently, according to each user input, for example, the edge enhancement value for the left-eye image is determined according to a predetermined image quality adjustment rule, such that the left-eye image is viewed to be same as the right-eye image viewed by the right eye with vision of 1.2. Subsequently, image quality adjustment is executed by the determined edge enhancement value. Moreover, when the 'user B' is inputted by the user identification information input unit, similar to the above, the user input for the left-eye image 'left-eye color vision: normal', and the user input for the right-eye image 'right-eye color vision: color blindness in blue' are acquired. Subsequently, according to the each user input, for example, image quality adjustment to convert the G value to the B value of pixels in the left-eye image.

As described above, in the stereoscopic image content reproduction apparatus of this example, by only inputting the user identification information, the image quality adjustment appropriate for the user is executed.

Moreover, when executing the image quality adjustment with respect to each user, identification information such as name or icon of the user relating to the image quality adjustment of the stereoscopic image content being displayed may be displayed on the display screen. According to this configuration, it is possible to notify for which user the stereoscopic image content reproduction is executed.

Moreover, for example, when a plurality of users such as a family view the content, the left-eye image adjustment unit and the right-eye image adjustment unit of the stereoscopic image content reproduction apparatus of this example may further comprise the following configuration. For example, average value or median value is calculated from the user input value of the user A, B, ..., thereby using the value as the image quality adjustment parameter. Morover, when the stereoscopic image content is a movie, for example, a movie of 30 frames per second is extended to 120 frames per second, and 60 frames are distributed to each of two users. Subsequently, image quality adjustments for the respective left-eye and right-eye images are executed for a frame group A, distributed to the user A, according to the input by the user A. Meanwhile, image quality adjustments, different from the above, for the respective left-eye and right-eye images are executed for a frame group B, distributed to the user B, according to the input by the user B. Subsequently, open/close duration and open/close timing of the respective liquid-crystal shutter for the users A and B are controlled according to the distribution proportion, such that the frame group A, adjusted independently for the right and left eye of the user A, is visually recognized only by the user A, and the frame group B, adjusted independently for the right and left eye of the user B, is visually recognized only by the user B.

Moreover, the left-eye and right-eye images after the adjustments, generated by the stereoscopic image content reproduction apparatus of this example, may be classified based on the vision feature, and distributed or soled etc. by a distributor of the content. Specifically, for example, the distributor of the content can sell the optical recording medium storing the content of 'left-eye vision: 1.2 and right-eye vision: 0.7', or can distribute the content via the internet, and the user can purchase the content suitable to his vision feature.

### <Hardware Configuration of Third Embodiment>

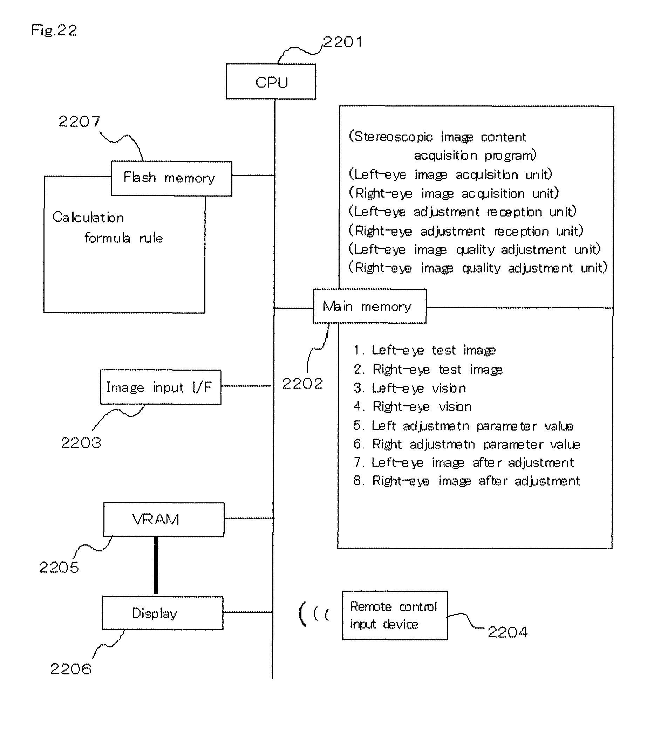

Fig. 22 is a diagram showing an example of hardware configuration of the stereoscopic image content reproduction apparatus of the third embodiment. The operation of the hardware components in the image quality adjustment and the image quality adjustment independently for the right-eye image and the lefr-eye image will be described with reference to Fig. 22.

As shown in Fig. 22, the stereoscopic image content reproduction apparatus is provided with a 'CPU' (2201), and a 'main memory' (2202), thereby executing various calculations and implementing the left-eye image quality adjustment unit, the right-eye image quality adjustment unit, the left-eye image acquisition unit, and the right-eye image acquisition unit. Moreover, the apparatus comprises an 'image input interface' (2203) for implementing the stereoscopic image content acquisition unit, a 'remote control input device' (2204) as the left-eye image adjustment reception unit and the the right-eye image adjustment reception unit, and a 'VRAM' (2205) and 'Display' (2206) as the output unit for image after adjustment. Moreover, the appratus further comprises a 'flash memory' (2207) for storing various data and the determination rule for the image quality adjustment parameter value.

Moreover, the programs are loaded into the 'main memory', and the 'CPU' refers to the program and executes the various calculations. Moreover, a plurality of addresses are assigned to the 'main memory' and the 'flash memory', and in the calculation by the 'CPU', address specification and access to the stored data are carried out, thereby executing the calculation by utilizing the data.

At the outset, for example, the reception of the reproduction instruction for the stereoscopic image content inputted to the 'remote control device' by the user triggers loading the stereoscopic image content acquisition program, the left-eye image acquisition program, and the the right-eye image acquisition program into the 'main memory'. Subsequently, the 'CPU' interprets the stereoscopic image content acquisition program, and according to the interpretation result, two images configuring the stereoscopic image content to be reproduced (when the content is the movie, a image group configured by a plurality of frames including the two images as one frame is acquired) from the storage device such as HDD by using the content ID included in the reproduction instruction as a key. Subsequently, the 'CPU' interprets the left-eye image acquisition program, and the right-eye image acquisition program, and according to the interpretation result, stores the left-eye and right-eye images separately at address 1, ..., address 2, ... in the 'main memory' with reference to the tag data of the two images configuring the stereoscopic image content.

Subsequently, the 'CPU' interprets the left-eye image adjustment reception program, and the right-eye image adjustment reception program, and according to the interpretation result, displays the GUI screen equipped with information entry filed etc. for receiving the user input (e.g., left-eye vision information) for adjusting the left-eye image and the user input for adjusting the left-eye image on the 'display'. Moreover, the left-eye and right-eye vision information may be directly inputted to the GUI screen, and the information may be preliminarily inputted and stored in the 'flash memory' etc, and an instruction to read the information or respectively stored user identification information may be inputted. Subsequently, for example, the right-eye and left-eye vision information acquired by the user input are stored at addresses 3 and 4 in the 'main memory'.

Subsequently, the 'CPU' leads and interprets the left-eye image quality adjustment program, and according to the interpretation result, substitutes a numeric value of the left-eye vision stored at the address 3 in the main memory into a calculation formula for determining the image quality adjustment value for the left-eye image, thereby calculating the left-eye image adjustment parameter value. Moreover, with reference to the table data by using the left-eye vision information as a key, the CPU acquires the left-eye image adjustment parameter value, and store the value at the address 5 in the 'main memory'. Moreover, the 'CPU' leads and interprets the right-eye image quality adjustment program, and according to the interpretation result, similar to the above processing, calculates and acquires the right-eye image adjustment parameter value by using the right-eye vision information stored at the address 4, and stores the value at the address 6 in the 'main memory'.

Subsequently, the 'CPU' executes, for example, the edge enhancement for the left-eye image stored at the address 1,... in the 'main memory' by using the left-eye image adjustment parameter value stored at the address 5. Moreover, the 'CPU' executes, for example, the edge enhancement for the right-eye image stored at the address 2,... in the 'main memory' by using the right-eye image adjustment parameter value stored at the address 6. Subsequently, the CPU stores the left-eye and right-eye images after image quality adjustments at address 7, ..., address 8 in the 'main memory', respectively. The image quality adjustment such as the edge enhancement may be executed only for one of the images. Moreover, differences in values between the user input for the left-eye image and the user input for the right-eye image may be calculated, thereby calculating the image quality adjustment parameter value for one of the images by using the difference value. Moreover, the image adjustment parameter value may be fixed value, and may be acquired from the 'flash memory' etc. according to the user input.

Subsequently, the 'CPU' interprets the ourput program for image after adjustment, and according to the interpretation result, alternatively displays the left-eye images after image quality adjustments stored at address 7..., and right-eye images after image quality adjustments stored at address 8... on the 'display' at high speed.

Note that the the stereoscopic image content reproduction apparatus of the embodiment may be installed in a content reproduction device such as a television receiver, a monitor apparatus, HDD recorder/player, or a content distribution server. Moreover, when being installed in a monitor device equipped to a seat of an airplane, the image quality adjustment may be executed according to user input by a user who takes the seat. Moreover, when being installed in the content distribution server, for example, a display apparatus as a transmission destination is specified by IP address etc, and the content may be transmitted after the image quality adjustment of the display apparatus with respect to each transmission destination by acquiring and using the user input correlated with the IP address.

### <Processing Flow of Third Embodiment>

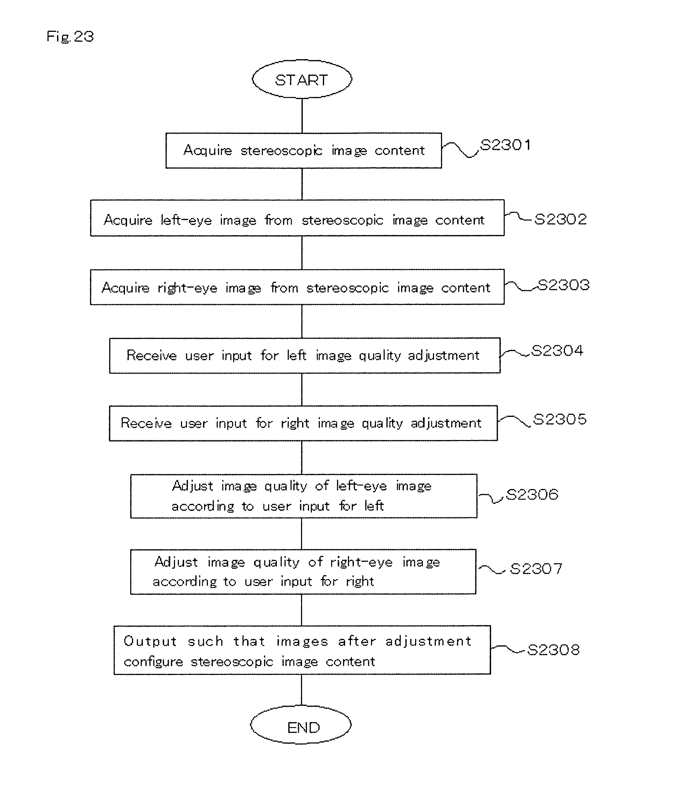

Fig. 23 is a flowchart of the stereoscopic image content reproduction apparatus of the third embodiment. Note that, the following steps may be executed by the respective hardware configurations of a computer as above, or may configure a program, which is stored in a medium and is for controlling the computer. As shown in Fig. 23, the stereoscopic image content is acquired from an external/internal content recording device according to the user's reproduction instruction (step S2301). Subsequently, from the acquired stereoscopic image content, the left-eye image is acquired with reference to the tag information of the image (step S2302), and similarly, from the acquired stereoscopic image content, the right-eye image is acquired (step S2303). Subsequently, the user input for image quality adjustment for the left-eye image is received via the GUI screen (step S2304), and similarly, the user input for image quality adjustment for the right-eye image is received (step S2305). Subsequently, the image quality adjustment is executed for the left-eye image independently from the right-eye image according to the user input for the left-eye image received in the step S2304 (step S2306), and the image quality adjustment is executed for the right-eye image independently from the left-eye image according to the user input for the right-eye image received in the step S2305 (step S2307). Finally, the images after the image quality adjustments are outputted, such that the images configure the stereoscopic image content (step S2308). The respecive image quality adjustments of the steps S2306 and S2307 may be executed only for one of the images. Moreover, differences in values between the user input for the left-eye image and the user input for the right-eye image may be calculated, thereby calculating the image quality adjustment parameter value for one of the images by using the difference value.

### <Brief Description of Effects of Third Embodiment>

As described above, in the stereoscopic image content reproduction apparatus of the third embodiment, image quality adjustment for each of the right-eye image and left-eye image configuring the stereoscopic content image is independently performed according to the user's vision feature difference between the right and left eyes. Therefore, for example, a user, who has different eyesights between right and left eyes, or a user, who wears 3D glasses with a different refractive index between right and left eyes, can visually recognize the both images as an identical image (apart from the difference due to parallax), and the stereoscopic viewing can be easily performed.

### «Fourth Embodiment»

### <Concept of Fourth Embodiment>

The stereoscopic image content reproduction apparatus of a fourth embodiment is based on the above embodiment and may comprise an 'image quality batch adjustment reception unit', receiving batch user input for batch image quality adjustment for the left-eye and right-eye images, an 'image quality parameter difference value acquisition unit', acquiring an image quality parameter difference value for increasing or decreasing a predetermined image quality parameter for the image quality adjustment through the received batch user input, and a 'batch adjustment unit', increasing or decreasing the received image quality parameter difference value, the left-eye image parameter value and the right-eye image parameter value.

Therefore, in the stereoscopic image content reproduction apparatus of the fourth embodiment based on the above embodiment, for example, when increasing the entire brightness, it is possible to execute batch image quality adjustment for the left-eye and right-eye images, which are respectively adjusted according to the user's vision ability difference between right and left eyes, and to increase the entire brightness of both images according to the user input.

### <Functional Configuration of Fourth Embodiment>

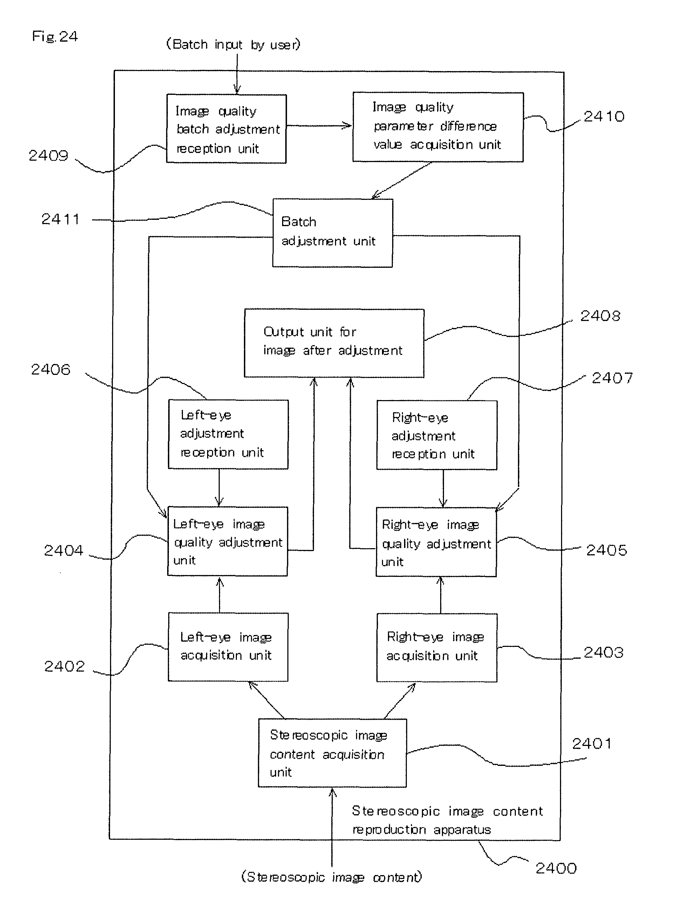

Fig. 24 is a functional block diagram of the stereoscopic image content reproduction apparatus of the fourth embodiment.

As shown in Fig. 24, a 'stereoscopic image content reproduction apparatus' (2400) of the fourth embodiment based on the third embodiment comprises a 'stereoscopic image content acquisition unit' (2401), a 'left-eye image acquisition unit' (2402), a 'right-eye image acquisition unit' (2403), a 'left-eye image quality adjustment unit' (2404), a 'right-eye image quality adjustment unit' (2405), a 'left-eye image quality adjustment reception unit' (2406), a 'right-eye image quality adjustment reception unit' (2407), and an 'output unit for image after adjustment' (2408). Moreover, the stereoscopic image content reproduction apparatus of the fourth embodiment further comprises a 'image quality batch adjustment reception unit' (2409), an 'image quality parameter difference value acquisition unit' (2410), and a 'batch adjustment unit' (2411).

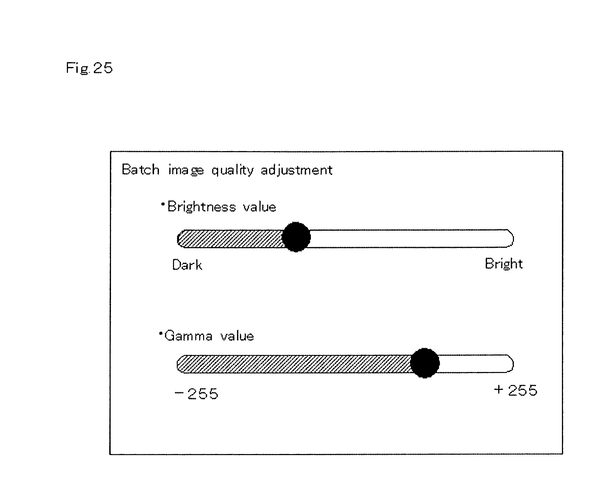

The 'image quality batch adjustment reception unit' (2409) has a function of receiving batch user input for batch image quality adjustment for the left-eye and right-eye images, and can be implemented by a CPU, a main memory, an input device, and a image quality batch adjustment reception program including the GUI. Specifically, for example, a slider bar of Fig. 25 is displayed, and an operation input to move the slider bar rightward or leftward is received from the user via the input device such as a remote control. When the user wishes, for example, to increase the entire brightness of the image, the user moves the slider bar to adjust the entire brightness.

The 'image quality parameter difference value acquisition unit' (2410) has a function of acquiring an image quality parameter difference value for increasing or decreasing a predetermined image quality parameter for the image quality adjustment through the received batch user input, and can be implemented by a CPU, a main memory, and a image quality parameter difference value acquisition program. The 'image quality parameter difference value' is a value for increasing or decreasing a predetermined image quality parameter for the image quality adjustment, and for example, includes a value such as 'brightness +10' or 'color value (any one of RGB values) +15'. The image quality parameter difference value acquisition unit acquires the values such as 'brightness +10' for the batch image quality adjustment for both images according to the batch user input received by the image quality batch adjustment reception unit.

The 'batch adjustment unit' (2411) has a function of increasing or decreasing the received image quality parameter difference value, the left-eye image parameter value and the right-eye image parameter value, and can be implemented by a CPU, a main memory, and a batch adjustment program. Specifically, as described in the third embodiment, the parameter values of the brightness +10 for left-eye image and the brightness ±0 for right-eye image are calculated. Subsequently, for the respectively calculated parameter values, the image quality parameter difference value 'brightness +10' for batch adjustment is applied, so that the image quality parameter values of the left-eye image brightness +20 and the right-eye image brightness +10 are finally calculated.

Moreover, for example, when the batch-inputted image quality parameter difference value is 'brightness +10', and when the independently calculated parameter values indicate that 'G value for left-eye image: +10' and 'B value for right-eye image: -10', the final parameter values, indicating that 'brightness +10' and 'G value +10' for the left-eye image, and 'brightness +10' and 'B value -10' for the right-eye image, are applied.

According to the stereoscopic image content reproduction apparatus of the fourth embodiment, it is possible to simultaneously execute batch image quality adjustment for the left-eye and right-eye images, which are independently adjusted according to the differences in the user's vision ability between right and left eyes.

### <Processing Flow of Fourth Embodiment>

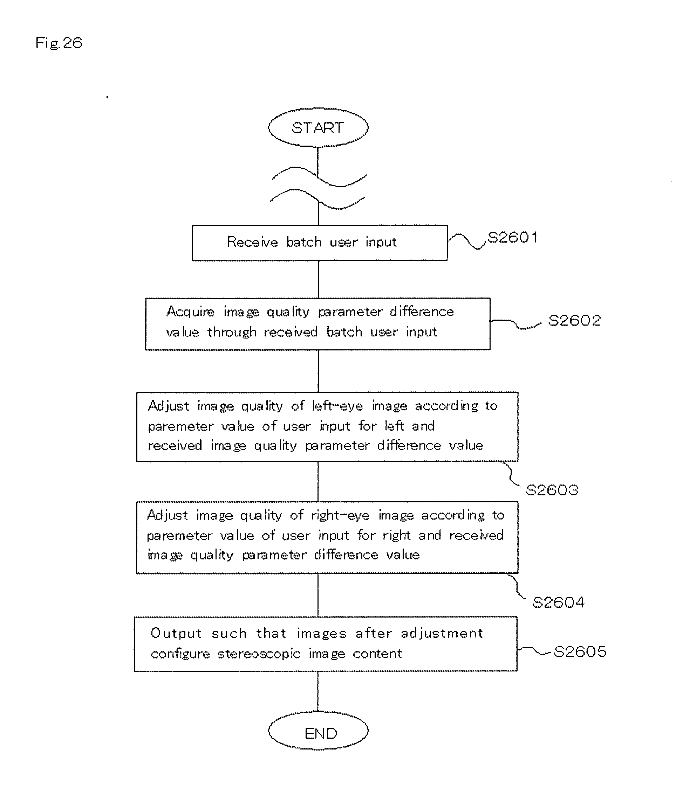

Fig. 26 is a flowchart showing processes in the stereoscopic image content reproduction apparatus of the fourth embodiment. Note that, the following steps may be executed by the respective hardware configurations of a computer as above, or may configure a program, which is stored in a medium and is for controlling the computer. As described in the third embodiment, the right-eye and left-eye images are acquired from the stereoscopic image content, and the user input for image quality adjustment for the left-eye image, and the user input for image quality adjustment for the right-eye image are received. As shown in Fig. 26, in addition to the right/left-independent user input according to the user's vision ability difference between right and left eyes, a batch user input for batch image quality adjustment for both images is received (step S2601). Subsequently, the image quality parameter difference value is acquired by the received batch user input (step S2602).

Subsequently, the image quality adjustment is executed for the left-eye image according to the image quality parameter value for the left-eye image by the user input according to the user's vision ability difference between right and left eyes, and to the image quality parameter difference value acquired by the step S2602 (step S2603). Similarly, the image quality adjustment is executed for the right-eye image according to the image quality parameter value for the right-eye image by the user input, and to the image quality parameter difference value acquired by the step S2602 (step S2604). Finally, the images after adjustments are outputted, such that the images configure the stereoscopic image content (step S2605).

### <Brief Description of Effects of Fourth Embodiment>

According to the stereoscopic image content reproduction apparatus of the fourth embodiment, it is possible to simultaneously execute batch image quality adjustment for the left-eye and right-eye images, which are independently adjusted according to the user's vision ability difference between right and left eyes.

### Description of Reference Numerals

0200 Stereoscopic image display apparatus
0201 First test image acquisition unit
0202 First image alternative display unit
0203 First reception unit for image quality adjustment of left-eye test image
0204 First reception unit for image quality adjustment of right-eye test image
0205 First image quality adjustment unit
0206 First correction unit for right and left ouputs

## Claims

1. A stereoscopic image display apparatus, comprising:
a first test image acquisition unit, acquiring left-eye and right-eye test images, both of which at least partially include an identical object for adjusting right and left image ouputs to solve visual non-uniformity due to difference between right and left eyesights of a viewer of stereoscopic content image;
a first image alternative display unit, alternately displaying the acquired left-eye and right-eye test images at a low speed without persistence of vision;
a first reception unit for image quality adjustment of left-eye test image, receiving an image quality adjustment from the viewer, such that the identical objects in the left-eye test image can be viewed to be identical with the object in the right-eye test image; and/or
a first reception unit for image quality adjustment of right-eye test image, receiving an image quality adjustment from the viewer, such that the identical objects in the left-eye test image can be viewed to be identical with the object in the left-eye test image; and
a first image quality adjustment unit, adjusting the left-eye and/or right-eye test images according to the image quality adjustment from the viewer received by the first reception unit for image quality adjustment of left-eye test image and/or the first reception unit for image quality adjustment of right-eye test image; and
a first correction unit for right and left ouputs, correcting the right and left ouputs of the stereoscopic content image according to the image quality adjustment, received from the viewer and used by the first image quality adjustment unit.

2. The stereoscopic image display apparatus according to Claim 1,
wherein the first test image acquisition unit further comprises a first acquisition section for test image for naked eyes, acquiring left and right test images for naked eyes to solve visual non-uniformity due to difference between right and left eyesights with naked eyes of the viewer.

3. The stereoscopic image display apparatus according to Claim 1 or 2,
wherein the first test image acquisition unit further comprises a first acquisition section for test image for glasses, acquiring left and right test images for glasses to solve visual non-uniformity due to difference between right and left eyesights with 3D glasses of the viewer.

4. The stereoscopic image display apparatus according to Claim 3,
wherein the first image alternative display unit further comprises a first image alternative display section in synchronization with glasses, alternately displaying the left and right test images for glasses by synchronizing with switching cycle of light transmission/light interception of a shutter of the 3D glasses when the 3D glasses the viewer wears has a shutter function.

5. The stereoscopic image display apparatus according to Claims 1 to 4,
wherein the first test image acquisition unit further comprises a first acquisition section for stripe image, acquiring an image with gradually-varying stripe, of which stripe width gradually varies, as the object in the left-eye and right-eye test images.

6. The stereoscopic image display apparatus according to Claims 1 to 5,
wherein the first test image acquisition unit further comprises a first acquisition section for color image, acquiring an image with gradually-varying color, of which color gradually varies, as the object in the left-eye and right-eye test images.

7. The stereoscopic image display apparatus according to Claims 1 to 5,
wherein the first test image acquisition unit further comprises a first acquisition section for RAMP image, acquiring a RAMP image, in which one or more tones of RGB values gradually varies, as the object in the left-eye and right-eye test images.

8. The stereoscopic image display apparatus according to Claims 1 to 7, further comprising:
a first storing unit with respect to each user, storing adjustment information for right and left image qualities correlated with user identification information for identifying the user; and
a first reception unit for input of user identification information, receiving an input of user identification information,
wherein the first correction unit for right and left ouputs executes the right and left outputs correction on a basis of the adjustment information for right and left image qualities correlated with the user identification information and stored.

9. The stereoscopic image display apparatus according to Claims 1 to 8, further comprising:
a first storing unit with respect to each 3D glasses, storing adjustment information for right and left image qualities, correlated with 3D glasses identification information for identifying the 3D glasses; and
a first acquisition unit for 3D glasses identification information, acquiring the 3D glasses identification information,
wherein the first correction unit for right and left ouputs executes the right and left outputs correction on a basis of the adjustment information for right and left image qualities, correlated with the 3D glasses identification information and stored.

10. A stereoscopic image display apparatus, comprising:
a second test image acquisition unit, acquiring a left-eye test image, at least partially including a left object to emphasize visual non-uniformity by being superimposed on a right-eye test image, and the right-eye test image, at least partially including a right object to emphasize visual non-uniformity by being synchronized and recognized with the left-eye test image, for adjusting right and left image ouputs to solve visual non-uniformity due to difference between right and left eyesights of a viewer of stereoscopic content image;
a second image display unit, displaying the acquired left-eye and right-eye test images, such that the viewer can recognize the both images viewed from the viewer's right and left eyes as an superimposed test image;
a second reception unit for image quality adjustment of left-eye test image, receiving an image quality adjustment for the left-eye test image from the viewer, such that the visual non-uniformity of the object emphasized by the superimposing test image is solved; and/or
a second reception unit for image quality adjustment of right-eye test image, receiving an image quality adjustment for the right-eye test image from the viewer, such that the visual non-uniformity of the object emphasized by the superimposing test image is solved; and
a second image quality adjustment unit, adjusting the left-eye and/or right-eye test images according to the image quality adjustment from the viewer received by the second reception unit for image quality adjustment of left-eye test image and/or the second reception unit for image quality adjustment of right-eye test image; and
a second correction unit for right and left ouputs, correcting the right and left ouputs of the stereoscopic content image according to the image quality adjustment, received from the viewer and used by the second image quality adjustment unit.

11. The stereoscopic image display apparatus according to Claim 10,
wherein the second test image acquisition unit further comprises a second acquisition section for test image for naked eyes, acquiring left-eye and right-eye test images for naked eyes to solve visual non-uniformity due to difference between right and left eyesights with naked eyes of the viewer.

12. The stereoscopic image display apparatus according to Claim 10 or 11,
wherein the second test image acquisition unit further comprises a second acquisition section for test image for glasses, acquiring left-eye and right-eye test images for glasses to solve visual non-uniformity due to difference between right and left eyesights with 3D glasses of the viewer.

13. The stereoscopic image display apparatus according to Claim 12,
wherein the second image alternative display unit further comprises a second image alternative display section in synchronization with glasses, alternately displaying the left-eye and right-eye test images for glasses by synchronizing with switching cycle of light transmission/light interception of a shutter of the 3D glasses when the 3D glasses the viewer wears has a shutter function.

14. The stereoscopic image display apparatus according to Claims 10 to 13,
wherein the second test image acquisition unit further comprises a second acquisition section for test image of dispersed pattern, acquiring a left-eye test image including an object of dispersed pattern that complements a right-eye test image without superimposing on each other, and the right-eye test image including an object of dispersed pattern that complements the left-eye test image without superimposing on each other.

15. The stereoscopic image display apparatus according to Claim 14,
wherein the dispersed pattern of the object is gradually-varying stripe, of which stripe width gradually varies.

16. The stereoscopic image display apparatus according to Claim 14 or 15,
wherein the dispersed patterns of the objects in the right-eye and left-eye test images have a relation of a complementary color with each other.

17. The stereoscopic image display apparatus according to Claims 14 to 16,
wherein the second test image acquisition unit further comprises a second acquisition section for color image, acquiring an image with gradually-varying color, of which color gradually varies, as the object in the left-eye and right-eye test images.

18. The stereoscopic image display apparatus according to Claim 14 to 16,
wherein the second test image acquisition unit further comprises a second acquisition section for RAMP image, acquiring a RAMP image, in which one or more tones of RGB values gradually varies, as the object in the left-eye and right-eye test images.

19. The stereoscopic image display apparatus according to Claims 10 to 18, further comprising:
a second storing unit with respect to each user, storing adjustment information for right and left image qualities correlated with user identification information for identifying the user; and
a second reception unit for input of user identification information, receiving an input of the user identification information,
wherein the second correction unit for right and left ouputs executes the right and left outputs correction on a basis of the adjustment information for right and left image qualities correlated with the user identification information and stored.

20. The stereoscopic image display apparatus according to Claims 10 to 19, further comprising:
a second storing unit with respect to each 3D glasses, storing adjustment information for right and left image qualities, correlated with 3D glasses identification information for identifying the 3D glasses; and
a second acquisition unit for 3D glasses identification information, acquiring the 3D glasses identification information,
wherein the second correction unit for right and left ouputs executes the right and left outputs correction on a basis of the adjustment information for right and left image qualities, correlated with the 3D glasses identification information and stored.

21. A method for operating a stereoscopic image display apparatus, the method causing a computer to execute a process, comprising:
acquiring left-eye and right-eye test images, both of which at least partially include an identical object for adjusting right and left image ouputs to solve visual non-uniformity due to difference between right and left eyesights of a viewer of stereoscopic content image;
alternately displaying the acquired left-eye and right-eye test images at a low speed without persistence of vision;
receiving an image quality adjustment from the viewer, such that the identical object in the left-eye test image can be viewed to be identical with the object in the right-eye test image; and/or
receiving an image quality adjustment from the viewer, such that the identical object in the left-eye test image can be viewed to be identical with the object in the left-eye test image; and
adjusting the left-eye and/or right-eye test images according to the image quality adjustment from the viewer received by the receiving image quality adjustment of left-eye test image and/or the receiving image quality adjustment of right-eye test image; and
correcting the right and left ouputs of the stereoscopic content image according to the image quality adjustment, received from the viewer and used for the adjusting.

22. A method for operating a stereoscopic image display apparatus, the method causing a computer to execute a process, comprising:
acquiring a left-eye test image, at least partially including a left object to emphasize visual non-uniformity by being superimposed on a right-eye test image, and the right-eye test image, at least partially including a right object to emphasize visual non-uniformity by being superimposed on the left-eye test image, for adjusting right and left image ouputs to solve visual non-uniformity due to difference between right and left eyesights of a viewer of stereoscopic content image;
displaying the acquired left-eye and right-eye test images, such that the viewer can recognize the both images viewed from the viewer's right and left eyes as an superimposing test image;
receiving an image quality adjustment for the left-eye test image from the viewer, such that the visual non-uniformity of the object emphasized by the superimposing test image is solved; and/or
receiving an image quality adjustment for the right-eye test image from the viewer, such that the visual non-uniformity of the object emphasized by the superimposing test image is solved; and
adjusting the left-eye and/or right-eye test images according to the image quality adjustment from the viewer received by the receiving image quality adjustment of left-eye test image and/or the receiving image quality adjustment of right-eye test image; and
correcting the right and left ouputs of the stereoscopic content image according to the image quality adjustment, received from the viewer and used for the adjusting.
